# NEUE EUROPÄISCHE PATENTSCHRIFT

(11) **EP 3 502 071 B2**
(45) Veröffentlichungstag und Bekanntmachung des Hinweises auf die Entscheidung über den Einspruch: **14.10.2026**
(45) Hinweis auf die Patenterteilung: 26.02.2020
(21) Anmeldenummer: 18213397.5
(22) Anmeldetag: 18.12.2018
(51) Int. Cl.: C03C 3/097, C03C 3/085, C03C 4/02, C03C 4/10, C03C 10/00, C03C 17/22, C03C 3/087, C03C 17/23

(54) **EINRICHTUNGS- UND AUSSTATTUNGSGEGENSTÄNDE FÜR KÜCHEN ODER LABORE MIT ANZEIGEEINRICHTUNG**
SETUP AND EQUIPMENT OBJECTS FOR KITCHENS OR LABORATORIES WITH DISPLAY EQUIPMENT
OBJETS D'AMEUBLEMENT ET D'ÉQUIPEMENT POUR CUISINES OU LABORATOIRES POURVUS DE DISPOSITIF D'AFFICHAGE

(30) Priorität: 22.12.2017 DE 102017131065; 07.05.2018 DE 102018110897
(43) Veröffentlichungstag der Anmeldung: 26.06.2019
(73) Patentinhaber: SCHOTT AG, 55122 Mainz (DE)
(72) Erfinder: WEISS, Evelin, 55131 Mainz (DE); BOCKMEYER, Matthias, 55116 Mainz (DE); DOERK, Birgit, 55128 Mainz (DE); SIEBERS, Friedrich, 55283 Nierstein (DE); HENN, Christian, 55546 Frei-Laubersheim (DE)
(74) Vertreter: WSL Patentanwälte Partnerschaft mbB

(56) Entgegenhaltungen:
- WO-A1-2012/001300
- WO-A1-2012/172257
- WO-A1-2014/068242
- DE-A1- 102008 050 263
- DE-A1- 102009 013 127
- DE-A1- 102009 013 127
- DE-U1- 202011 110 029
- DE-U1- 202011 110 029
- DE-U1- 202016 007 247
- FR-A1- 2 405 906
- US-A- 4 526 873
- US-A- 5 010 041
- US-A- 5 179 045
- US-A- 5 204 293
- US-A- 5 256 600
- US-A1- 2017 050 880
- US-A1- 2017 260 086
- "Glass: Mechanics and Technology", 1 January 2008, article ERIC LE BOURHIS: "Performance Indeices", pages: 17, XP055758827
- SCHOTT TECHNICAL GLASSES, 2007, pages 1 - 40
- TSG Titania Silicate Low Expansion Glass, Corning Advanced Materials, New York, 16.08.2006
- Measurements on the thermal Expansion of fused Silica, W.Souder and P. Hidnert, Washington,21.09.1925
- Couleurs Lab
- Déclaration Erwann Luais
- Die deutsche Rechtschreibung
- Color i7 Spektralfotometer

## Beschreibung

Die Erfindung betrifft Einrichtungs- oder Ausstattungsgegenstände für Küchen oder Labore mit einem thermisch stabilen Glas- oder Glaskeramiksubstrat und einer Anzeigeeinrichtung.

In Einrichtungs- und Ausstattungsgegenständen für Küchen und Laboren kommen Scheiben aus Glas oder Glaskeramik in vielfältiger Weise zum Einsatz. Je nach Anforderungen beispielsweise an die chemische oder thermische Beständigkeit oder die optischen Eigenschaften werden hierfür unterschiedliche Gläser oder Glaskeramiken ausgewählt.

So finden sich beispielsweise Scheiben aus Glas oder Glaskeramik als Sichtfenster in Türen von Öfen, Kühlschränken und Mikrowellengeräten, als Abdeckscheibe von Bedienelementen von Kochgeräten und Kaffeemaschinen, als Arbeitsplatte eines Küchenschranks oder Labormöbels, sowohl im privaten als auch im professionellen Umfeld.

Immer häufiger weisen solche Gegenstände zusätzlich eine Anzeigeeinrichtung auf, das beispielsweise zur Darstellung von Informationen oder in Kombination mit einem entsprechenden Eingabegerät zur Steuerung eines Betriebszustandes eines damit verbundenen elektrischen Bauteils vorgesehen ist.

Aus dem Stand der Technik ist es beispielsweise bekannt, Kochgeräte mit einem Flüssigkristalldisplay auszustatten, dass so unter einer Kochfläche aus Glaskeramik angeordnet ist, dass das Display von einem Benutzer des Kochgeräts durch die Glaskeramik hindurch sichtbar ist. Mit einem solchen Display kann beispielsweise der Betriebszustand des Kochgeräts dargestellt werden.

Eine wichtige Anforderung an die Kochfläche ist dabei jedoch, dass sie den Blick auf die im Inneren des Kochgeräts verbauten elektrischen Komponenten wie beispielsweise Heizelemente verbirgt, indem sie eine niedrige Lichtdurchlässigkeit aufweist. Hierfür kann die Glaskeramik eingefärbt, stark lichtstreuend oder transparent in Kombination mit einer lichtundurchlässigen Beschichtung ausgeführt werden. Diese drei Varianten unterscheiden sich vor allem in der Möglichkeit der Farbgestaltung. Die eingefärbten Glaskeramiken erzeugen einen im wesentlichen schwarzen Farbeindruck, die lichtstreuenden einen im Wesentlichen weißen. Der Farbeindruck der transparenten Glaskeramiken hängt von der Wahl der Beschichtung ab und bietet somit den größten Gestaltungsspielraum.

Unter einem eingefärbten Material, gleich welcher Art, wird dabei jedes Material verstanden, dass aufgrund seiner Zusammensetzung transmittiertes Licht derart absorbiert, dass es einen Lichttransmissionsgrad von höchstens 80 % aufweist. Eingefärbte Materialien enthalten also in ihrer Zusammensetzung färbende beziehungsweise absorbierende Bestandteile. Dabei kann es sich beispielsweise um Farbstoffe, Pigmente oder andere färbende chemische Verbindungen handeln. Im Unterschied dazu, werden Materialien nicht als eingefärbt verstanden, die als solche einen Lichttransmissionsgrad von mehr als 80 % aufweisen, aber auf ihrer Oberfläche eine farbgebende, beispielsweise eine eingefärbte, Beschichtung aufweisen.

Von diesen drei Varianten sind die lichtstreuenden Glaskeramiken nicht dafür geeignet mit einer Anzeigeeinrichtung kombiniert zu werden, da die Streuung die Lesbarkeit einer Anzeigeeinrichtung derart verschlechtert, dass es zur Anzeige von Informationen oder zur Steuerung eines Betriebszustandes nicht mehr geeignet ist.

Eingefärbte Glaskeramiken für Kochflächen enthalten in der Regel Vanadium-Ionen zur Farbgebung, da diese die besondere Eigenschaft besitzen, im Bereich des sichtbaren Lichts zu absorbieren und im Bereich der Infrarotstrahlung eine hohe Transmission zu erlauben. Eine solche Färbung mittels V₂O₅ ist beispielsweise aus der DE 10 2008 050 263 A1 bekannt. In Verbindung mit Anzeigeeinrichtungen tritt bei solchen eingefärbten Glaskeramiken das Problem auf, dass die Transmissionscharakteristik im sichtbaren Spektralbereich derart ist, dass es zu einer Verfälschung der von der Anzeigeeinrichtung dargestellten Farben durch die Glaskeramik kommt. Eine Möglichkeit zur Korrektur dieser unerwünschten Farbverschiebung ist das Anbringen eines Farbkompensationsfilters, was jedoch mit zusätzlichem Aufwand verbunden ist. Solche Farbkompensationsfilter sind aus der DE 10 2011 050 873 A1 bekannt.

Aus der EP 3 049 374 B1 ist es bekannt, dass transparente, nicht eingefärbte Glaskeramiken mittels eines Laserprozesses, also über einen thermischen Prozess, lokal abgedunkelt werden können. Die im abgedunkelten Bereich resultierenden Transmissionsspektren zeichnen sich durch einen sehr flachen Verlauf aus. Dieses Verfahren hat jedoch mehrerer Nachteile. Zum einen kann es wirtschaftlich nur auf kleinen Flächen erfolgen, da der Laser langsam über die zu färbende Fläche gerastert werden muss, und diese nötigenfalls sogar mehrfach überstreichen muss. Zum anderen ist die Abdunkelung nur relativ schwach ausgeprägt und es ist nicht möglich auf diese Weise Glaskeramiken mit niedrigem Lichttransmissionsgrad herzustellen. Darüber hinaus ist der Prozess reversibel, so dass die Färbung keine ausreichende thermische Stabilität aufweist.

Ähnliches gilt auch für die transparenten Glaskeramiken mit einer lichtdurchlässigen Beschichtung. Aus der GB 2430249 B ist beispielsweise eine gesputterte Unterseitenbeschichtung für ein Glaskeramik-Kochfeld offenbart, die im roten Spektralbereich eine höhere Transmission aufweist als im blauen oder grünen und sich somit ähnlich verhält, wie eine eingefärbte Glaskeramik. Bei einer solchen Beschichtung besteht ebenfalls die Möglichkeit einen zusätzlichen Farbkompensationsfilter anzubringen.

Alternativ kann der Bereich, in dem die Anzeigeeinrichtung angeordnet sein soll, von der Beschichtung ganz oder zumindest teilweise ausgespart sein. Dies hat den Vorteil, dass das von der Anzeigeeinrichtung ausgestrahlte Licht nur durch die transparente Glaskeramik hindurchtritt und nicht durch die Beschichtung und somit keine Farbortverschiebung durch die Beschichtung erfährt. Nachteilig hierbei ist jedoch, dass das Anzeigeeinrichtung im ausgeschalteten Zustand ebenfalls deutlich sichtbar ist, was aus ästhetischen Gründen unerwünscht ist.

Darüber hinaus sind von optischen Anwendungen auch beschichtete oder eingefärbte Gläser bekannt, die spezifisch dafür optimiert sind, den Farbort von durch sie hindurchtretendem Licht nicht zu verschieben. Solche, auch als Neutraldichtefilter beziehungsweise Graugläser bekannten Systeme sind aufgrund mangelhafter thermischer beziehungsweise chemischer Beständigkeit nicht für den Einsatz in Küchen oder Laboren geeignet. Insbesondere verspiegelte Neutraldichtefilter sind allgemein für den Einsatz in Küchen oder Laboren nicht geeignet, da sie schon leichte Verschmutzungen und Kratzer deutlich erkennen lassen und deshalb aufwändig zu reinigen sind. Im Speziellen weisen Neutraldichtefilter und Graugläser nicht die für einen Einsatz in Kochgeräten notwendige Transparenz im infraroten Spektralbereich auf.

Die Dokumente DE 20 2011 110 029 U1, DE 10 2009 013 127 A1 und DE 10 2008 050 263 beschreiben Kochflächen mit farbigen Anzeigeeinrichtungen.

Eine Aufgabe der Erfindung ist es, einen Einrichtungs- oder Ausstattungsgegenstand für eine Küche oder ein Labor mit einer Anzeigeeinrichtung bereitzustellen, der die im Stand der Technik vorhandenen Nachteile überwindet oder zumindest verbessert.

Diese Aufgabe wird gelöst durch einen Einrichtungs- oder Ausstattungsgegenstand für eine Küche oder ein Labor gemäß Anspruch 1. Vorteilhafte Ausführungsformen sind in den abhängigen Ansprüchen aufgeführt.

Ein solcher Einrichtungs- oder Ausstattungsgegenstand für eine Küche oder ein Labor umfasst eine Anzeigeeinrichtung und ein Trennelement, wobei das Trennelement zumindest Abschnittsweise einen Innenbereich des Gegenstandes von einem Außenbereich abtrennt und ein Glas- oder Glaskeramiksubstrat umfasst, wobei das Glaskeramiksubstrat einen thermischen Ausdehnungskoeffizienten CTE zwischen 20 und 300 °C von -2,5 bis 2,5 x 10⁻⁶/K aufweist oder das Glassubstrat einen thermischen Ausdehnungskoeffizienten CTE zwischen 20 und 300 °C von 3,5 bis 6 x 10⁻⁶/K und eine Glasübergangstemperatur T_{g} von 500 bis 650 °C, insbesondere von 550 bis 650 °C aufweist. Die Anzeigeeinrichtung ist dabei im Innenbereich des Gegenstandes so angeordnet, dass das von der Anzeigeeinrichtung ausgesandte Licht durch einen Abschnitt des Trennelements hindurchtritt und von einem Benutzer im Außenbereich des Gegenstandes wahrnehmbar ist. Auf der Seite des Trennelementes, die dem Innenbereich des Gegenstandes zugewandt ist, ist ein Abdeckmittel angeordnet, das einen Lichttransmissionsgrad von höchstens 7 % aufweist und zumindest im Bereich der Anzeigeeinrichtung zumindest eine Aussparung aufweist, die mit dem Glas- oder Glaskeramiksubstrat überlappt. Das Abdeckmittel weist einen Farbort mit den Koordinaten L* von 20 bis 40, a* von -6 bis 6 und b* von -6 bis 6, gemessen in Remission mit Licht der Normlichtart D65 vor einem schwarzen Hintergrund in Durchsicht durch das Glas- oder Glaskeramiksubstrat auf. Im Bereich der Aussparung weist das Trennelement einen Lichttransmissionsgrad von wenigstens 5 % und von höchstens 70 % auf. Weiterhin ist das Trennelement dadurch gekennzeichnet, dass der Farbort von Licht der Normlichtart D65 nach Durchtritt durch das Glas- oder Glaskeramiksubstrat des Trennelementes im Bereich der Aussparung des Abdeckmittels innerhalb eines Weißbereichs W1 liegt, der im Chromatizitätsdiagramm CIExyY-2° durch die folgenden Koordinaten bestimmt ist:

| Weißbereich W1 | |
|---|---|
| **x** | **y** |
| 0,27 | 0,21 |
| 0,22 | 0,25 |
| 0,32 | 0,37 |
| 0,45 | 0,45 |
| 0,47 | 0,34 |
| 0,36 | 0,29 |

Unter einem Einrichtungs- oder Ausstattungsgegenstand für eine Küche oder ein Labor ist im Sinne der vorliegenden Erfindung allgemein ein Küchen- oder Labormöbel oder ein vorzugsweise elektrische betriebenes Küchen- oder Laborgerät zu verstehen, unabhängig von der konkreten Bauform. Zu Küchen- oder Labormöbeln zählen dabei insbesondere Schränke und Tische, die auf Ihrer Oberseite eine Arbeitsplatte aufweisen. Küchengeräte wie Kochgeräte, Kühlschränke, Mikrowellengeräte, Grills, Backöfen, Dampfgarer, Toaster oder Abzugshauben können dabei sowohl für den privaten als auch für den professionellen Bereich ausgelegt sein. Ebenso kann der Gegenstand ein separat angeordnetes Bedienfeld sein, über das ein Benutzer ein oder mehrere damit ansteuerbare Geräte bedienen kann. Erfindungsgemäße Geräte können beispielsweise in Küchen- oder Labormöbel integrierbar sein oder frei im Raum stehen. Zu den Laborgeräten zählen unter anderem auch Öfen, Klimaschränke, Kühlschränke oder Heizplatten.

Ein solcher Gegenstand umfasst eine Anzeigeeinrichtung zur Darstellung von Informationen durch Aussendung von Licht. Die Anzeigeeinrichtung kann insbesondere als graphisches, selektiv ansteuerbares, vorzugsweise farbige Pixel umfassendes Display ausgebildet sein. Beispiele für solche Displays sind LCD- und OLED-Displays. Die Anzeigeeinrichtung kann ebenso ein Bild- oder Videoprojektor sein, der Licht vom Innenbereich des Gegenstandes in den Außenbereich projiziert. Anzeigeeinrichtungen können auch einen berührungsempfindlichen Sensor zur Bedienung durch einen Benutzer aufweisen.

Weiterhin umfasst ein erfindungsgemäßer Gegenstand ein Trennelement, das zumindest Abschnittsweise einen Innenbereich des Gegenstandes von einem Außenbereich abtrennt und dass ein Glas- oder Glaskeramiksubstrat umfasst. Im Falle eins Küchen- oder Laborgeräts kann das Trennelement also zumindest einen Teil des Gehäuses oder gegebenenfalls einer Tür des Geräts darstellen. Ein Beispiel hierfür ist eine Kochplatte, die den Innenbereich eines Kochfeldes, in dem außer einer Anzeigeeinrichtung beispielsweise Heizelemente vorhanden sind, von dessen Außenbereich, in dem sich der Benutzer des Kochfeldes aufhält, abtrennt. Ebenso stellen Sichtfenster in Backofen- oder Mikrowellentüren erfindungsgemäße Trennelemente dar. In Küchen- oder Labormöbeln können solche Trennelemente zumindest einen Teil des Korpus des Möbels oder der Front einer Tür oder Schublade darstellen. Besonders bevorzugt ist das Trennelement ein Teil oder sogar die gesamte Arbeitsplatte eines Küchen- oder Labormöbels.

Das Trennelement, insbesondere das Glas- oder Glaskeramiksubstrat, unterliegt in seiner Größe keinen bestimmten Beschränkungen und kann prinzipiell in jedem in der Glasindustrie üblichen Maß hergestellt werden. Es kann beispielsweise die typische Größe eines Kochfeldes mit vier Kochzonen von ca. 49 x 56 cm² oder kleiner aufweisen. Ebenso kann es die Größe einer üblichen Küchenarbeitsplatte von ca. 63 x 250 cm² oder größer aufweisen. Alle Größen dazwischen sind ebenso realisierbar. Insbesondere kann das Trennelement in jeder GEN-Größe GEN 1 bis GEN 10.5 vorliegen:

| | **Länge [mm]** | **Breite [mm]** |
|---|---|---|
| GEN 1 | 300 | 400 |
| GEN 2 | 370 | 470 |
| GEN 3 | 550 | 650 |
| GEN 3.5 | 600 | 720 |
| GEN 4 | 680 | 880 |
| GEN 4.5 | 730 | 920 |
| GEN 5 | 1100 | 1250-1300 |
| GEN 6 | 1500 | 1800--1850 |
| GEN 7 | 1870 | 2200 |
| GEN 7.5 | 1950 | 2250 |
| GEN 8 | 2160 | 2460 |
| GEN 10 | 2880 | 3130 |
| GEN 10.5 | 2940 | 3370 |

Für jegliche Form von Einrichtungs- und Ausstattungsgegenständen für Küchen und Labore sind die Temperaturwechselbeständigkeit und die Chemikalienbeständigkeit besonders wichtige Parameter. Insbesondere für Teile von Geräten bei deren Verwendung hohe Temperaturen entstehen wie Kochfelder, Heizplatten, Öfen, Backöfen mit Pyroloysefunktion, Mikrowellen oder Grills gelten hierfür besonders hohe Anforderungen. Aber auch praktisch alle anderen Bereich eine Küche oder eines Labors müssen temperaturstabil sein, da immer die Gefahr besteht, dass sie mit heißen oder sehr kalten Gegenständen oder Flüssigkeiten in Kontakt kommen. Bei einem solchen Kontakt verändert sich die Temperatur in einem lokal begrenzten Bereich sehr schnell, was zu Spannungen im Werkstoff führt, die insbesondere bei sprödbrüchigen Werkstoffen wie Glas und Glaskeramik schnell zur Zerstörung führen können.

Am effektivsten kann eine sehr gute thermische Temperaturbeständigkeit erreicht werden, indem das Glaskeramiksubstrat einen linearen thermischen Ausdehnungskoeffizienten CTE, gemäß ISO 7991, zwischen -2,5 x 10⁻⁶/K und 2,5 x 10⁻⁶/K, bevorzugt zwischen -1,5 x 10⁻⁶/K und 1,5 x 10⁻⁶/K, im Temperaturbereich zwischen 20 °C und 300 °C, bevorzugt zwischen 20°C und 700°C, aufweist. Bei einem derart niedrigen thermischen Ausdehnungskoeffizienten führen auch große Temperaturgradient nicht zum Aufbau von Spannungen im Substrat. Dieser Wert wird beispielsweise von Quarzglas oder von Lithium-Aluminium-Silikat-Glaskeramiken (LAS-Glaskeramiken), z.B. der Marke CERAN^{®} der Firma SCHOTT AG erreicht. Der thermische Ausdehnungskoeffizient zwischen 20°C und 300°C wird auch als CTEα_{20/300} bezeichnet. Der thermische Ausdehnungskoeffizient zwischen 20°C und 700°C wird auch als CTEα_{20/700} bezeichnet.

Je höher der CTE des Glases oder der Glaskeramik ist und je größer die bei Verwendung möglicherweise auftretenden Temperaturgradienten sein können, desto höher ist das Risiko von spannungsinduzierten Brüchen. Dem kann entgegengewirkt werden, in dem das Glas oder die Glaskeramik thermisch oder chemisch vorgespannt wird. Durch eine solche Vorspannung entsteht an der Oberfläche des Glases eine Druckspannung, die der thermischen Spannung entgegenwirkt. Das thermische Vorspannen ist dabei aus wirtschaftlichen Gründen besonders zu bevorzugen. Es kann allerdings aus technischen Gründen nur bei Gläsern mit einer Dicke von mindestens 2 mm und einem CTE von mindestens 3,5 x 10⁻⁶/K durchgeführt werden. Zusätzlich darf die Glasübergangstemperatur T_{g} der Gläser, gemessen nach ISO 7884-8 bzw. DIN 52324, einen Wert von ca. 650 °C, vor allem bei Gläsern mit einem CTE zwischen 3,5 und 6 x 10⁻⁶/K, nicht überschreiten, damit beim Vorspannen mit handelsüblichen Vorspannöfen ausreichend hohe Vorspannungswerte von mehr als ca. 10 MPa erzielt werden können.

Gläser mit einem CTE zwischen 20 und 300 °C von mehr als 6 x 10⁻⁶/K sind generell, also auch vorgespannt, nicht für den Einsatz in Küchen und Laboren geeignet. Gläser mit höherem CTE, wie z.B. Kalk-Natron-Glass mit einem CTE von ca. 9 x 10⁻⁶/K, können zwar im Allgemeinen gut thermisch vorgespannt werden. Die erzielbaren Vorspannungswerte sind aber dennoch nicht ausreichend, um die bei thermischer Belastung durch die große thermische Ausdehnung entstehenden Spannungen kompensieren zu können. Sowohl für thermisch, als auch für chemisch vorgespannte Glassubstrate ist zu beachten, dass die Vorspannung durch eine Belastung mit hohen Temperaturen über längere Zeiten abgebaut wird. Dieser Abbau läuft schneller ab, je niedriger der T_{g} des Glases ist. Deshalb müssen vorgespannte Gläser für die Verwendung in Küchen und Laboren einen T_{g} von mindestens 500 °C, bevorzugt mindestens 550 °C, aufweisen. Erfindungsgemäß kommen also Glaskeramiken mit einem CTE zwischen 20 und 300 °C von -2,5 bis 2,5 x 10⁻⁶/K oder Gläser mit einem CTE zwischen 20 und 300 °C von 3,5 bis 6 x 10⁻⁶/K und einem T_{g} von 500 bis 650 °C, insbesondere von 550 bis 650 °C, zum Einsatz.

Von ebenso großer Bedeutung wie die thermische Beständigkeit ist die chemische Beständigkeit des Glas- oder Glaskeramiksubstrats gegenüber Säuren und Laugen. In Laboren ist dies wegen des Umgangs mit Chemikalien allgemein vorteilhaft, in Küchen ist insbesondere die Resistenz gegenüber Reinigungsmitteln und Lebensmittelbestandteilen wichtig. Insbesondere Gläser mit hohen Anteilen von mehr als 10 Gewichtsprozent auf Oxidbasis an Alkali- oder Erdalkalimetallen, wie beispielsweise Kalk-Natron-Glas, sind deshalb nicht für erfindungsgemäße Gegenstände geeignet.

Auf der Seite des Trennelementes, die dem Innenbereich des Gegenstandes zugewandt ist, ist ein Abdeckmittel angeordnet, das einen Lichttransmissionsgrad von höchstens 7 % aufweist. Das Abdeckmittel ist auf der dem Innenbereich zugewandten Seite angeordnet, damit es vor äußeren Einflüssen, insbesondere Beschädigungen durch mechanische Belastungen, geschützt ist.

Ein solches Abdeckmittel dient dazu, den Gesamtlichttransmissionsgrad vom Innenbereich des erfindungsgemäßen Gegenstandes in den Außenbereich im Bereich des Trennelements unabhängig vom Lichttransmissionsgrad des Trennelements auf höchstens 5 % zu begrenzen, um einen Einblick in den erfindungsgemäßen Gegenstand zu verhindern. Verzugsweise weist das Abdeckmittel einen Lichttransmissionsgrad von höchstens 1 %, bevorzugt höchstens 0,1 % auf. Der Maximalwert für den Lichttransmissionsgrad von 5 % ergibt sich dabei bei einer Kombination eines Trennelements mit einem Lichttransmissionsgrad von 70 % und einem Abdeckmittel mit einem Lichttransmissionsgrad von 7 %.

Der Lichttransmissionsgrad wird im Wellenlängenbereich 380 nm bis 780 nm unter Verwendung von Licht der Normlichtart D65 gemäß DIN EN 410 bestimmt. Der Lichttransmissionsgrad entspricht dem Wert nach auch der Helligkeit Y im CIExyY-2° Farbraum.

Im Bereich der Anzeigeeinrichtung weist das Abdeckmittel wenigstens eine Aussparung auf, durch die Licht hindurchtreten kann, das von der Anzeigeeinrichtung emittiert wird. Die Größe der Aussparung ist dabei bevorzugt an die Größe der Anzeigeeinrichtung, bzw. an den leuchtenden Teil der Anzeigeeinrichtung angepasst. Alternativ können z.B. auch mehrere Aussparungen vorgesehen sein, die beispielsweise ein regelmäßiges oder unregelmäßiges Raster bilden, wobei die Gesamtgröße des Rasters dann vorzugsweise an die Größe der Anzeigeeinrichtung angepasst ist. Die Aussparung dient also dazu, dass das von der Anzeigeeinrichtung emittierte Licht nicht von dem Abdeckmittel absorbiert wird, sondern durch das Glas- oder Glaskeramiksubstrat hindurchtreten kann.

Bei dem Abdeckmittel kann es sich um eine Beschichtung, ein selbsttragendes Trägermaterial, wie beispielsweise eine Platte oder Folie aus Glas, Glaskeramik, Kunststoff oder Isolationsmaterialien, die beispielsweise Schichtsilikate (Glimmer) wie Mica oder Faserstoffe enthalten, handeln. Es kann sich auch um eine Kombination davon handeln, beispielsweise eine beschichtete Kunststofffolie oder ein Glas-Kunststoff-Laminat.

Das Abdeckmittel weist einen Farbort mit den Koordinaten L* von 20 bis 40, a* von -6 bis 6 und b* von -6 bis 6 auf. Bevorzugt weist das Abdeckmittel einen Farbort im CIELAB-Farbraum mit L* kleiner oder gleich 35, besonders bevorzugt kleiner oder gleich 30, ganz besonders bevorzugt kleiner oder gleich 28 und größer oder gleich 22, bevorzugt größer oder gleich 25, mit a* von -4 bis +4 bevorzugt von -2 bis 2, besonders bevorzugt von -1 bis 1, und mit b* von -4 bis +4 bevorzugt von -2 bis 2, besonders bevorzugt von -1 bis 1, gemessen in Remission, auf. Dieser Farbort wird von Beobachtern allgemein als schwarz oder zumindest als dunkel wahrgenommen, was aus ästhetischen Gründen für Einrichtungs- und Ausstattungsgegenstände bevorzugt wird. Farborte mit einem L* von mehr als 40 erscheinen zu hell, um als schwarz wahrgenommen zu werden. Farborte mit einem Betrag von |a*| größer als 6 und/oder einem Betrag von |b*| größer als 6 werden deutlich als farbig empfunden und nicht als schwarz. Je kleiner die Werte von L*, |a*| und |b*| sind, desto dunkler und weniger bunt wird der Farbton empfunden.

Abdeckmittel mit einem L*-Wert von weniger als 40 und insbesondere von weniger als 35, 30 oder sogar 28 haben gegenüber solchen mit höherem L*-Wert zusätzlich den Vorteil, dass sie im Vergleich insgesamt weniger Licht reflektieren. Dadurch kann das Licht von im Innenbereich eines erfindungsgemäßen Gegenstandes montierten Anzeigeeinrichtungen von einem Beobachter im Außenbereich besser wahrgenommen werden, da der Kontrast, also das Verhältnis zwischen transmittierter Helligkeit der Anzeigeeinrichtung zu reflektierter Helligkeit des Umgebungslichts, größer ist. Dies ist insbesondere in typischen Einbausituation von Einrichtungs- und Ausstattungsgegenständen mit einer hellen Umgebungsbeleuchtung, wie es beispielsweise bei Arbeitsbeleuchtungen in Küchen und Laboren üblicherweise der Fall ist, von Vorteil. Hierdurch kann auch der Bedienkomfort und die Bediensicherheit eines solchen Gegenstandes verbessert werden. Dies ist insbesondere im Vergleich zu gesputterten metallischen Schichten als Abdeckmittel, beispielsweise aus Titan oder Silizium, die üblicherweise einen L*-Wert von mehr als 70 aufweisen, vorteilhaft.

Diese Farbkoordinaten werden gemessen, indem das Glas- oder Glaskeramiksubstrat zusammen mit dem Abdeckmittel so auf eine Schwarzfalle gelegt werden, dass das Abdeckmittel auf der Seite der Schwarzfalle angeordnet ist und das Substrat auf der Seite des Messgerätes. Dann wird mit einem handelsüblichen Farbmessgerät, beispielsweise dem Spektralphotometer CM-700d der Firma Konica Minolta, unter Verwendung der Normlichtart D65, einem 10° Standard-Beobachter der Farbort in Remission gemessen. Als Schwarzfalle kann beispielsweise die Schwarz-Glaskachel CM-A511 von Konica Minolta verwendet werden. Die Bezeichnung Messung gegen eine Schwarzfalle bedeutet in diesem Sinne, dass die zu messende Probe zwischen dem Messgerät und einer Schwarzfalle angeordnet ist.

Abdeckmittel in Form von Beschichtungen können beispielsweise auf Basis von Email, Sol-Gel-Materialien oder eingefärbten Silikonen hergestellt werden. Emailbasierte Beschichtungen, die für Küchengeräte geeignet sind, sind beispielsweise aus der DE 10 2015 103 461 A1 bekannt. Dort ist unter anderem offenbart, dass durch Verwendung eines auf dem LAS-Materialsystem basierenden Glasflusses unter Zusatz von Spinell-basierten Pigmenten wie z.B. Co(Cr,Fe)₂O₄ oder (Mn,Fe)₂O₃, Farborte wie L* = 25, a* = 0 und b* = -0,5 oder L* = 27, a* = 2 und b* = 1 erzielt werden können. Die Pigmente und deren Menge in der Beschichtungszusammensetzung können so ausgewählt werden, dass bei der vorgesehenen Schichtdicke der Beschichtung der Lichttransmissionsgrad kleiner als 7 % ist. Gegebenenfalls kann der Lichttransmissionsgrad auch durch mehrlagige Beschichtung reduziert werden.

In der DE 10 2008 031 428 A1 werden für Küchengeräte geeignete Beschichtungen auf Sol-Gel-Basis offenbart, deren Farbort im Bereich 30<L*<85, -8<a*<8 und -8 < b* < 8 eingestellt werden kann. Hierfür wird eine Mischung aus Tetraethoxyorthosilan (TEOS) und Triethoxymethylsilan (TEMS) hergestellt, wobei Alkohol als Lösungsmittel zugegeben werden kann. Eine wässrige Metalloxid-Dispersion, insbesondere eine SiO₂-Dispersion in Form kolloiddisperser SiO₂-Partikel, wird mit Säure, vorzugsweise Salzsäure gemischt. Die beiden getrennt hergestellten Mischungen können für eine verbesserte Homogenisierung gerührt werden. Anschließend werden die beiden Mischungen zusammengegeben und vermischt. Vorteilhafterweise lässt man diese Mischung, vorzugsweise unter ständigem Rühren, für beispielsweise eine Stunde reifen. Parallel zum Ansatz dieser Mischung können Pigmente und optional weitere Füllstoffe, bevorzugt pyrogene Kieselsäure, abgewogen, der reifenden Mischung zugegeben und dispergiert werden. Für schwarze Schichten wird eine Pigmentmischung mit 67 Gew.-% beschichteten plättchenförmigen Pigmenten und 33 Gew.-% feinpulvrigem Graphit verwendet.

Diese Wahl des Farbortes des Abdeckmittels ist auch deshalb vorteilhaft, weil handelsübliche LCD- und OLED-Displays bei direkter Betrachtung, also ohne zusätzliches Substrat oder ähnliches, und bei ansonsten gleicher Messmethode einen ähnlichen Farbort aufweisen. Wird also ein Abdeckmittel mit oben beschriebenem Farbort und eine Anzeigeeinrichtung beispielsweise mit einem Farbort mit den Koordination L* zwischen 25 und 45, a* zwischen -4 und 0 und b* zwischen -2 und 3 kombiniert, ist das Display in Durchsicht durch das Glas- oder Glaskeramiksubstrat des Trennelementes auch bei hohen Transmissionsgraden des Trennelementes von bis zu 70 % optisch kaum von einem angrenzenden Abdeckmittel unterscheidbar.

Im Bereich der Aussparung des Abdeckmittels weist das Trennelement einen Lichttransmissionsgrad von wenigstens 5 % und von höchstens 70 % auf. Bevorzugt weist das Trennelement im Bereich der Aussparung einen Lichttransmissionsgrad von wenigstens 9 %, besonders bevorzugt wenigstens 15 %, ganz besonders bevorzugt wenigstens 20 % und von höchstens 55 %, besonders bevorzugt höchstens 45 % und ganz besonders bevorzugt höchstens 40 % auf. Der Lichttransmissionsgrad, kann also beispielsweise in einem der folgenden Bereiche liegen: 5-70 %, 5-55 %, 5-45 %, 5-40 %, 9-70 %, 9-55 %, 9-45 %, 9-40 %, 15-70 %, 15-55 %, 15-45 %, 15-40 %, 20-70 %, 20-55 %, 20-45 % oder 20-40 %.

Ein Mindesttransmissionsgrad von 5% ist dabei erforderlich, damit bei Verwendung handelsüblicher Anzeigeeinrichtungen das Licht der Anzeigeeinrichtung im Außenbereich deutlich wahrnehmbar ist. Je nach Helligkeit der Umgebung sollte die Leuchtdichte der Anzeigeeinrichtung im Außenbereich ca. zwischen 100 und 200 cd/m² liegen, um eine gute Wahrnehmbarkeit zu gewährleisten. Bei einem Lichttransmissionsgrad des Trennelementes von 5% ist beispielsweise eine Anzeigeeinrichtung mit einer Leuchtdichte von 2000 cd/m² nötig, um im Außenbereich eine Leuchtdichte von 100 cd/m² zu erzeugen. Bei einem Lichttransmissionsgrad von 70 % reicht bereits eine Anzeigeeinrichtung mit einer Leuchtdichte von ca. 140 cd/m² aus, um im Außenbereich ca. 100 cd/m² zu erzielen. Ein höherer Lichttransmissionsgrad des Trennelementes im Bereich der Anzeigeeinrichtung wirkt sich dabei positiv auf die Energieeffizienz des Systems aus, da eine Anzeigeeinrichtung mit niedrigerer Leuchtdichte und somit weniger Energieverbrauch betrieben werden kann. Davon abgesehen sind Anzeigeeinrichtungen mit niedrigerer maximaler Leuchtdichte auch in der Anschaffung kostengünstiger. Bei einem Lichttransmissionsgrad von mehr als 70 % sind sowohl das Abdeckmittel als auch die Anzeigeeinrichtung im ausgeschalteten Zustand durch das Glas- oder Glaskeramiksubstrat deutlich sichtbar, sodass bereits geringe farbliche Unterschiede zwischen Abdeckmittel und Anzeigeeinrichtung deutlich erkennbar sind.

Der Lichttransmissionsgrad des Trennelementes im Bereich der Aussparung des Abdeckmittels kann dabei auf zwei Weisen eingestellt werden. Zum einen kann das Glas- oder Glaskeramiksubstrat eingefärbt werden. Geeignet sind hierfür zunächst alle bekannten Färbemittel, solange der durch das Substrat gemessene Farbort des Abdeckmittels in dem oben genannten Bereich liegt. Der Lichttransmissionsgrad kann dabei mittels der Menge an Färbemittel eingestellt werden. Zum anderen kann das Glas- oder Glaskeramiksubstrat mit einer absorbierenden Beschichtung versehen werden. Im Fall von Beschichtungen kann der Lichttransmissionsgrad beispielsweise mittels der Schichtdicke beeinflusst werden. Auch hier muss der Farbort des Abdeckmittels gemessen in Durchsicht durch das beschichtete Substrat im oben genannten Bereich liegen. Es ist auch denkbar, ein eingefärbtes Glas zusätzlich mit einer absorbierenden Beschichtung zu versehen.

Weiterhin ist das Trennelement dadurch gekennzeichnet, dass der Farbort von Licht der Normlichtart D65 nach Durchtritt durch das Glas- oder Glaskeramiksubstrat des Trennelementes im Bereich der Aussparung des Abdeckmittels, innerhalb eines Weißbereichs W1 liegt, der im Chromatizitätsdiagramm CIExyY-2° durch die folgenden Koordinaten bestimmt ist:

| Weißbereich W1 | |
|---|---|
| x | y |
| 0,27 | 0,21 |
| 0,22 | 0,25 |
| 0,32 | 0,37 |
| 0,45 | 0,45 |
| 0,47 | 0,34 |
| 0,36 | 0,29 |

Der Weißbereich W1 ergibt sich dabei als ein Bereich entlang der Schwarzkörperkurve im CIExyY-Farbraum, der von ca. 2.750 K bis ca. 1.000.000 K (= 1 MK) Farbtemperatur reicht und an der oberen Grenze um einen Wert von ca. y = 0,04 gegenüber der Schwarzkörperkurve nach oben und an der unteren Grenze um ca. y = 0,07 nach unten verschoben ist. Hieraus ergibt sich der folgende Effekt: Licht der Normlichtart D65 hat per Definition eine Farbtemperatur von ca. 6.500 K und bei direkter Betrachtung mit einem 2° Beobachter einen Farbort von x = 0,31 und y = 0,33. Mit der vorliegenden Erfindung kann also bei Durchtritt von Licht durch das Trennelement der Farbort des Lichtes im Wesentlichen entlang der Schwarzkörperkurve, sowohl zu höheren als auch zu niedrigeren Farbtemperaturen verschoben werden, ohne einen unerwünschten Farbstich zu erzeugen. Weißes Licht wird also nach dem Durchtritt immer noch als weißes Licht wahrgenommen.

Der Farbort von Licht nach Durchtritt durch das Substrat kann beispielsweise mit dem Farbmessgerät CS-150 von Konica Minolta gemessen werden. Ebenso ist es möglich das Transmissionsspektrum des Substrats zu messen und damit und mit Hilfe des bekannten Spektrums von D65-Normlicht und der Augenempfindlichkeit eines 2°-Normalbeobachters entsprechend der Vorgaben des CIE den Farbort zu berechnen.

Anzeigeeinrichtungen wie Displays sind beispielsweise üblicherweise so eingestellt, dass sie weißes Licht mit einer Farbtemperatur von 5.000 K, 6.500 K oder 9.300 K emittieren. Der erfindungsgemäße Gegenstand ermöglicht es also, mit handelsüblichen Displays ohne weitere notwendige Anpassungen einen für Displays gewünschten Farbort des vom Display emittierten Lichts im Außenbereich des Gegenstandes zu erzeugen.

In einer bevorzugten Ausführungsform ist das Trennelement dadurch gekennzeichnet, dass der Farbort von Licht der Normlichtart D65 nach Durchtritt durch das Glas- oder Glaskeramiksubstrat des Trennelementes im Bereich der Aussparung des Abdeckmittels innerhalb eines Weißbereichs W2 liegt, der im Chromatizitätsdiagramm CIExyY-2° durch die folgenden Koordinaten bestimmt ist:

| Weißbereich W2 | |
|---|---|
| x | y |
| 0,25 | 0,27 |
| 0,32 | 0,36 |
| 0,41 | 0,42 |
| 0,42 | 0,36 |
| 0,35 | 0,31 |
| 0,27 | 0,24 |

Der Weißbereich W2 ergibt sich dabei als ein Bereich entlang der Schwarzkörperkurve im CIExyY-Farbraum, der von ca. 3.500 K bis ca. 20.000 K Farbtemperatur reicht und an der oberen Grenze um einen Wert von ca. y = 0,025 gegenüber der Schwarzkörperkurve nach oben und an der unteren Grenze um ca. y = 0,04 nach unten verschoben ist. Dieser Bereich erstreckt sich im Vergleich zu W1 also entlang eines kürzeren Abschnitts der Schwarzkörperkurve und weist eine geringere Abweichung in den x- und y-Koordinaten von der Schwarzkörperkurve auf.

Dieser Abschnitt der Schwarzkörperkurve von ca. 3.500 K bis ca. 20.000 K entspricht dabei den Farborten, die von natürlichem Sonnenlicht abgedeckt werden können. Eine Abendsonne kurz vor Beginn der Dämmerung entspricht einem Schwarzkörperstrahler mit ca. 3.500 K, ein klarer Himmel zur Mittagszeit entspricht einem Schwarzkörperstrahler mit ca. 20.000 K. Farborte auf oder in der Nähe der Schwarzkörperkurve werden insbesondere in diesem Bereich deshalb als Weiß und besonders natürlich wahrgenommen.

Besonders bevorzugt ist das Trennelement dadurch gekennzeichnet, dass der Farbort von Licht der Normlichtart D65 nach Durchtritt durch das Glas- oder Glaskeramiksubstrat des Trennelementes im Bereich der Aussparung des Abdeckmittels innerhalb eines Weißbereichs W3 liegt, der sich entlang der Schwarzkörperkurve im CIExyY-Farbraum von ca. 5.000 K bis ca. 20.000 K Farbtemperatur erstreckt und an der oberen Grenze um einen Wert von ca. y = 0,025 gegenüber der Schwarzkörperkurve nach oben und an der unteren Grenze um ca. y = 0,04 nach unten verschoben ist. Der Weißbereich W3 entspricht also im Wesentlichen dem Bereich W2, beginnt aber erst bei einer Farbtemperatur von 5.000 K. Dieser Farbbereich entspricht Tageslichtweiß und wird vom menschlichen Beobachter entsprechend als besonders reines Weiß, insbesondere als Kaltweiß, wahrgenommen.

| Weißbereich W3 | |
|---|---|
| x | y |
| 0,250 | 0,270 |
| 0,290 | 0,320 |
| 0,340 | 0,370 |
| 0,360 | 0,320 |
| 0,310 | 0,280 |
| 0,270 | 0,240 |

Dies gelingt mit der vorliegenden Erfindung überraschender Weise auch ohne die Verwendung eines Schwarzkörperkompensationsfilters zum Ausgleich des Transmissionsverlaufs des Trennelements. Unter einem Schwarzkörperkompensationsfilter wird dabei im Sinne der vorliegenden Erfindung ein optischer Filter verstanden, dessen Transmissionsspektrum so auf das Transmissionsspektrum des Trennelementes abgestimmt ist, dass Licht der Normlichtart D65 nach Durchtritt durch den Schwarzkörperkompensationsfilter und das Trennelement einen Farbort mit Koordinaten innerhalb des Weißbereichs W1 oder gegebenenfalls W2 aufweist.

Erfindungsgemäß ist ein solcher Filter nicht notwendig, da Licht der Normlichtart D65 nach Durchtritt durch das Trennelement bereits einen Farbort in diesem Bereich aufweist. Ein solcher Filter kann optional dennoch zwischen dem Trennelement und einer Anzeigeeinrichtung angeordnet sein, beispielsweise, wenn verschiedene Bereiche des Trennelements für transmittiertes Licht der Normlichtart D65 unterschiedliche Farborte innerhalb des Bereichs W1 oder W2 erzeugen sollen.

Schwarzkörperkompensationsfilter können beispielsweise in Form aufgedruckter, aufgetragener oder entsprechend angeordneter Schichten, Folien oder Platten vorliegen. Auch andere Farbkompensationsfilter sind denkbar, beispielsweise, um im Innenbereich des Gegenstandes emittiertes weißes Licht für einen Beobachter im Außenbereich farbig, beispielsweise blau, rot, grün oder mit einer beliebigen anderen Farbe, erscheinen zu lassen.

Trennelemente, die die oben genannte Anforderung erfüllen, umfassen beispielsweise neuartige Glaskeramiksubstrate, die aus einer transparenten, eingefärbten LAS-Glaskeramik bestehen, die als färbende Komponenten 0,003 - 0,5 Gew.-% MoO₃ und/oder weniger als 0,2 Gew.-% Nd₂O₃ und/oder weniger als 0,015 Gew.-% V₂O₅ enthalten. Wie im Folgenden erläutert wird, ist es vorteilhaft jede dieser drei Komponenten unabhängig von den anderen aus den genannten Bereichen zu wählen. Besonders bevorzugt werden jedoch wenigstens zwei oder sogar alle drei dieser Komponenten gleichzeitig aus diesen Bereichen gewählt.

Diese neuartigen und gegenüber dem Stand der Technik deutlich farbneutraleren Glaskeramiken bieten aufgrund ihrer Transmissionscharakteristik große Vorteile beim modularen Verbau, wie z.B. bei den marktüblichen modular aufgebauten Kochfeldern und ebenso in Kombination mit anderen glasbestückten Geräten wie z.B. Backöfen mit farbneutralen Vorsatzscheiben oder Kühlschränken mit Glasfronten.

Die transparenten, eingefärbten Glaskeramiken unterscheiden sich dabei von den transparenten, nicht eingefärbten Glaskeramiken dadurch, dass die Transmission über die gezielte Zugabe einer oder mehrerer färbenden Verbindungen, die im Sichtbaren absorbieren, erniedrigt ist. Diese färbenden Verbindungen als Bestandteil der Zusammensetzung einer eingefärbten Glaskeramik erhöhen also im Vergleich zu einer nicht eingefärbten Glaskeramik den Absorptionskoeffizienten der Glaskeramik. Der resultierende spektrale Verlauf der Transmissionskurve für eine definierte Dicke bedingt die Farbe der Glaskeramik und deren Helligkeit.

Synonym zu dem Begriff eingefärbte Glaskeramik wird in der Literatur auch der Begriff volumengefärbte Glaskeramik verwendet. Beide Begriffe stellen darauf ab, dass die Glaskeramik in ihrer Zusammensetzung färbende Bestandteile enthält, die einen Einfluss auf den Absorptionskoeffizienten der Glaskeramik haben. Damit unterscheiden sich diese Materialien fundamental von nicht eingefärbten Glaskeramiken, die zur Farbgebung eines daraus hergestellten Artikels eine farbige Beschichtung aufweisen. Eine solche Beschichtung hat keinerlei Einfluss auf den Absorptionskoeffizienten der Glaskeramik.

Ein Mindestgehalt von 0,003 Gew.-% MoO₃ ist bei diesen bevorzugten Glaskeramiken vorteilhaft, um die gewünschte Farbwirkung zu erhalten. Wenn niedrigere Lichttransmission gewünscht ist, sind höhere MoO₃- Gehalte vorteilhaft. Ebenso sind bei zunehmenden Fe₂O₃- oder V₂O₅- Gehalten höhere MoO₃- Gehalte vorteilhaft, da sowohl Fe₂O₃ als auch V₂O₅ die Transmissionscharakteristik der Glaskeramik so verändern, dass der Farbort von Licht der Normlichtart D65 nach Durchtritt durch die Glaskeramik von der Schwarzkörperkurve weg verschoben wird, insbesondere zu roten Farbtönen hin. Bevorzugt sind zur Einstellung der Farbwirkung mindestens 0,01, weiter bevorzugt mindestens 0,03 und besonders bevorzugt mindestens 0,05 Gew.-% MoO₃ enthalten. Da in der Glaskeramik verschieden Wertigkeiten des Mo-Atoms vertreten sind, sind die angegebene Gehalte der Zusammensetzung analytisch auf diese Verbindung bezogen. Als Obergrenze beträgt der MoO₃- Gehalt bevorzugt 0,3, weiter bevorzugt 0,25 und besonders bevorzugt 0,2 Gew.-%.

Mit einem Gehalt von 0,003 - 0,5 Gew.-% MoO₃ ist es möglich, den Lichttransmissionsgrad eines 2 bis 8 mm dicken Glaskeramiksubstrats auf einen Wert von 5 % bis 70 % einzustellen.

Es hat sich gezeigt, dass die Zugabe von MoO₃ eine Absenkung der Glasviskosität bewirkt und günstig ist für die Schmelzbarkeit und Läuterung des Glases. Allerdings wirken insbesondere die reduzierten Molybdänoxid-Spezies auch als Keimbildner und können die Entglasungsstabilität verschlechtern. Daher ist es vorteilhaft, den Gehalt zu begrenzen.

Glaskeramiken enthalten vorzugsweise weniger als 0,2 Gew.-% Nd₂O₃, da bei diesem Farboxid die Farbwirkung über schmale Absorptionsbanden im Bereich bei 526, 584 und 748 nm zustande kommt. Licht in diesen Wellenlängenbereich wird beim Durchgang durch die Glaskeramik stärker absorbiert. Der weiter bevorzugte Gehalt an Nd₂O₃ beträgt weniger als 0,06 Gew.-%. Besonders bevorzugt wird kein Nd₂O₃ eingesetzt, so dass die Glaskeramik technisch frei von Nd₂O₃ ist. An Verunreinigungen sind dann in der Regel weniger als 10 ppm enthalten.

Insbesondere die Komponente V₂O₅ verschiebt den Farbort von transmittiertem Licht der Normlichtart D65 im CIE-Farbsystem zu höheren x- Werten, also ins Orangerote. Die Komponente eignet sich zwar für eine Kombinationsfärbung mit MoO₃. Allerdings färbt V₂O₅ stärker, so dass der Gehalt vorzugsweise begrenzt wird, um die erfindungsgemäße Farbwirkung einfacher zu erreichen. Höhere Gehalte als 0,015 Gew.-% sind dafür ungünstig. Bevorzugt beträgt der V₂O₅-Gehalt weniger als 0,01 Gew.-% und weiter bevorzugt maximal 0,005 Gew.-%. Besonders bevorzugt wird kein V₂O₅ der Zusammensetzung beigegeben und es liegen nur Verunreinigungen von wenigen, meist 1-15 ppm, in der Glaskeramik vor. Das Molybdänoxid ist in dieser bevorzugten Ausführungsform also das Hauptfärbemittel und es gilt die Komponentenbeziehung MoO₃ /V₂O₅ > 1, bevorzugt > 3, besonders bevorzugt > 5.

In einer besonders bevorzugten Ausfühungsform, enthält eine Glaskeramik als färbende Komponenten 0,003 - 0,5 Gew.-% MoO₃ und weniger als 0,2 Gew.-% Nd₂O₃ und weniger als 0,015 Gew.-% V₂O₅. Mit einer solchen Glaskeramik können besonders farbneutrale Substrate zur Verwendung in Einrichtungs- oder Ausstattungsgegenständen bereitgestellt werden.

Eine weitere bevorzugte Zusammensetzung einer Glaskeramik, die die obengenannten Anforderungen erfüllt, besteht in Gew.-% auf Oxidbasis im Wesentlichen aus:

| | |
|---|---|
| Li₂O | 2,5 - 5,5 |
| Σ Na₂O + K₂O | 0,1 - < 4 |
| MgO | 0 - 3 |
| Σ CaO + SrO + BaO | 0 - 5 |
| ZnO | 0 - 4 |
| B₂O₃ | 0 - 3 |
| Al₂O₃ | 16 - 26 |
| SiO₂ | 58 - 72 |
| TiO₂ | 1,5 - 5,5 |
| ZrO₂ | 0 - 2,5 |
| SnO₂ | 0,1 - < 0,7 |
| Σ TiO₂ + ZrO₂ + SnO₂ | 3 - 6,5 |
| P₂O₅ | 0 - 5 |
| MoO₃ | 0,003 - 0,5 |
| Fe₂O₃ | 0 - 0,025 |
| V₂O₅ | 0 - 0,015 |
| Nd₂O₃ | 0 - < 0,02 |

Der Begriff "im Wesentlichen besteht aus" bedeutet, dass die aufgeführten Komponenten wenigstens 96 % in der Regel wenigstens 98 % der Gesamtzusammensetzung betragen sollen. Diese Glaskeramiken enthalten optional Zusätze chemischer Läutermittel wie As₂O₃, Sb₂O₃, CeO₂ und von Läuterzusätzen wie Manganoxid, Sulfat-, Halogenid-Verbindungen (F, Cl, Br) in Gesamtgehalten bis zu 2,0 Gew.-%.

Aus Kostengründen ist es besonders vorteilhaft den Gehalt an Li₂O möglichst gering zu wählen. Eine Reduzierung des Li₂O Anteils bewirkt aber eine Erhöhung der thermischen Ausdehnung, so dass die Menge an Li2O je nach Anforderungen der Anwendung passen ausgewählt werden muss. Vorzugsweise enthält eine solche Glaskeramik zwischen 2,5 und 5,0 Gew.-% oder zwischen 2,7 und 4,5 Gew.-% oder zwischen 2,9 und 4,0 Gew.-% oder zwischen 3,0 und 3,5 Gew.-% Li₂O.

Verbindungen einer Vielzahl von Elementen wie z. B. den Alkalien Rb, Cs oder Elementen wie Mn, Hf sind bei großtechnisch verwendeten Gemengerohstoffen übliche Verunreinigungen. Andere Verbindungen wie z.B. solche der Elemente W, Nb, Ta, Y, Seltene Erden, Bi, V, Cr, Ni können ebenfalls als Verunreinigung großtechnisch verwendeter Gemengerohstoffe, typischerweise im ppm-Bereich, enthalten sein.

Aus Gründen des Umwelt- und des Arbeitsschutzes wird auf den Einsatz von giftigen oder bedenklichen Rohstoffen nach Möglichkeit verzichtet. Daher ist die Glaskeramik vorzugsweise frei von umweltschädlichen Stoffen, wie Arsen (As), Antimon (Sb), Cadmium (Cd), Blei (Pb), Caesium (Cs), Rubidium (Rb) Halogeniden und Schwefel (S), abgesehen von unvermeidbaren Verunreinigungen im Bereich von bevorzugt 0 bis kleiner 0,5 Gewichtsprozent, besonders bevorzugt kleiner 0,1 Gewichtsprozent, ganz besonders bevorzugt kleiner 0,05 Gewichtsprozent. Die Angaben in Gewichtsprozent beziehen sich dabei auf die Glaszusammensetzung auf Oxidbasis.

Allgemein können entweder natürlich vorkommende Rohstoffe oder chemisch aufbereitete beziehungsweise synthetisch hergestellte Rohstoffe für die Herstellung verwendet werden. Natürlich vorkommende Rohstoffe sind in der Regel kostengünstiger als äquivalente chemisch aufbereitete oder synthetisierte Rohstoffe. Die Verwendbarkeit natürlicher Rohstoffe ist allerdings durch die üblicherweise hohen Mengen an Verunreinigungen beschränkt. Beispiele für natürlich vorkommende Rohstoffe sind Quarzsand, Spodumen und Petalit. Chemisch aufbereitete oder synthetisch hergestellte Rohstoffe enthalten in der Regel nur sehr wenige Verunreinigungen. Beispiele für gebräuchliche aufbereitete oder synthetisierte Rohstoffe sind Lithiumcarbonat oder Titandioxid-Pulver.

Die Verunreinigungen durch typische Spurenelemente bei den verwendeten technischen Rohstoffen liegen üblicherweise bei 200 ppm B₂O₃, 30 ppm Cl, 1 ppm CoO, 3 ppm Cr₂O₃, 200 ppm Cs₂O, 3 ppm CuO, 200 ppm F, 400 ppm HfO₂, 3 ppm NiO, 500 ppm Rb₂O, 5 ppm V₂O₅.

Alternativ zu einem solchen mittels Molybdänoxid als Hauptfärbemittel eingefärbten transparenten Glaskeramiksubstrats, kann das Trennelement auch ein transparentes, nicht eingefärbtes, temperaturbeständiges Substrat aus Glas- oder Glaskeramik mit einer Beschichtung mit entsprechenden optischen Eigenschaften umfassen.

Dabei kommen für einen erfindungsgemäßen Gegenstand nur solche Schichten in Betracht, die einen Farbort mit L* von 20 bis 40, a* von -6 bis 6 und b* von -6 bis 6, gemessen in Remission mit Licht der Normlichtart D65 gegen eine Schwarzfalle in Durchsicht durch das Glas- oder Glaskeramiksubstrat aufweisen. Dadurch scheiden insbesondere helle, also stark reflektierende, bunte und metallisch spiegelnde Schichten aus.

Gleichzeitig muss der Lichttransmissionsgrad der Schichten in einem Bereich von 5 % bis 70 % eingestellt werden können, gemessen in Transmission durch die Schicht und das Substrat hindurch.

Hierdurch scheiden beispielsweise transparente Schichtsysteme, z.B. mehrlagige Schichten aus Oxiden, Nitriden und/oder Oxinitriden, aus. Mit solchen interferenzoptischen Schichtsystemen können zwar die a*- und b*-Komponenten des Farborts in Remission gezielt angepasst werden, es ist aber nicht möglich gleichzeitig einen niedrigen Lichttransmissionsgrad von 5 bis 70 % und eine niedrige Helligkeit in Remission, also einen L*-Wert zwischen 20 und 40 einzustellen. Bei solchen Systemen kann mangels absorbierender Materialien nur zwischen einer hohen Transmission bei niedriger Reflexion, z.B. Anti-Reflex-Schichten, oder einer niedrigen Transmission bei hoher Remission, z.B. dichroitische Spiegel, gewählt werden. Eine niedrige Transmission bei gleichzeitig niedriger Remission ist nicht realisierbar.

Davon abgesehen sind mehrlagige, insbesondere interferenzoptische, Schichtsysteme schon aus Kostengründen für Einrichtungs- und Ausstattungsgegenstand für Küchen und Labore nicht geeignet.

Diese Anforderungen werden überraschender Weise von neuartigen Schichten auf Basis von Spinellen, Cermets, Carbiden oder Carbonitriden erfüllt.

Spinelle sind aus der Mineralogie und von keramischen Vollkörpern bekannt. Die Erfinder haben herausgefunden, dass oxidische Spinelle überraschenderweise als Legierung von einem metallischen Target reaktiv gesputtert unter unterstöchiometrischer Zugabe von Sauerstoff einen sehr niedrigen L*-Wert von weniger als 35 aufweisen. Dadurch lassen sich prinzipiell dunkle Farbtöne bei gleichzeitig niedriger elektrischer Leitfähigkeit herstellen. Auch der Transmissionsverlauf solcher Schichten verläuft flach, sodass Licht der Normlichtart D65 nach Durchtritt durch eine solche Beschichtung innerhalb des Weißbereichs W1 liegt.

Im Wellenlängenbereich von 780 nm bis ca. 4.500 nm weisen Beschichtungen aus Spinellen hohe spektrale Transmissionsgrade von über 30 % oder sogar über 50 %, bis hin zu mehr als 80 % auf. Im Wesentlichen ist der spektrale Transmissionsgrad im infraroten Spektralbereich bei Abdeckplatten mit SpinellBeschichtungen nicht durch die Beschichtung, sondern durch das verwendete Substrat limitiert. Nicht eingefärbte, transparente LAS-Glaskeramiken, beispielsweise der Marke CERAN CLEARTRANS^{®} der SCHOTT AG mit einer Spinellbeschichtung weisen bei einer Wellenlänge von ca. 3.750 nm einen spektralen Transmissionsgrad von über 40 % auf. Solche Beschichtungen sind also insbesondere für die Verwendung von Strahlungsheizelementen oder Infrarotsensoren hinter oder unter dem Trennelement geeignet. Die Flächenwiderstände liegen bei mehr als 1 MΩ/□ bei einer Prüfspannung von 1000V. Somit sind diese Schichten auch für die Verwendung mit kapazitiven und induktiven Sensoren und Induktionsspulen zur Energieübertragung, wie beispielsweise Induktionsheizelementen, geeignet.

Geeignete Spinelle weisen eine Zusammensetzung gemäß der Formel AₓCᵤB_{y}DᵥE_{z}F_{w} auf, wobei A und C ausgewählt sind aus der Gruppe bestehend aus Cr2+; Mn2+, Fe2+, Co2+, Ni2+, Cu2+, Zn2+; Al3+, Sn2+/4+, Ti4+, Zr4+, oder der Lanthanide und Mischungen davon. B und D sind ausgewählt aus der Gruppe bestehend aus Mn3+, Fe3+, Co3+, Ni3+, Cu3+, Al3+, Ga3+, Sn4+, Sc3+, Ti4+, Zn2+, oder der Lanthanide und Mischungen davon. E und F sind bevorzugt ausgewählt aus der Gruppe bestehend aus den divalenten Anionen von S, Se und O und Mischungen davon. Die Werte von x, u, y, v, z und w erfüllen die folgenden Formeln: $0 , 125 < \left(x+u\right) / \left(y+v\right) \leq 0 , 55$ und $z + w = 4 .$

Bevorzugt weist die Beschichtung Kristallite auf, wobei zumindest 95 Gew.-% der Kristallite symmetrische, kubische Kristallstrukturen vom Spinell-Typ zeigen.

Um die Farbneutralität zu verbessern ist es möglich über eine zwischen dem Substrat und der Spinellbeschichtung angeordneten Ausgleichsschicht das Schichtsystem zu verändern. Der L*-Wert in Remission wird dadurch nahezu nicht beeinflusst. Ausgleichsschichten können Materialien sein, welche ihre Brechzahlen zwischen Substrat und Spinellbeschichtung im sichtbaren Spektrum aufweisen, z.B. CeO2, HfO2, Y2O3, Si3N4, AlN, SiO2, Al2O3, AlTiOx, TiSiOx, SiOxNy, AlSiOxNy. Auch unterstöchiometrische Varianten können als Ausgleichsschicht verwendet werden. Die Schichtdicke solche Ausgleichsschichten liegt bevorzugt im Bereich 25 bis 500 nm, besonders bevorzug 35 bis 250 nm. Überraschender Weise ändert eine solche Ausgleichsschicht nur den Farbort der Beschichtung in Remission, nicht jedoch die Transmissionscharakteristik. Eine solche Ausgleichsschicht wirkt also insbesondere nicht als Schwarzkörperkompensationsfilter.

In einer bevorzugten Ausführungsform besteht die Beschichtung aus einem Spinell aus einem der folgenden Materialsysteme: Aluminiumspinelle, Chromspinelle, Eisenspinelle, Titanspinelle, Kobaltspinelle. Besonders bevorzugt besteht die Beschichtung aus CoFeMnCr-Spinell und weist optional eine Ausgleichsschicht aus SiOxNy auf.

In einer weiteren bevorzugten Ausführungsform besteht die Beschichtung aus einem Cermet mit einer oxidischen Matrix aus SiO₂, Al₂O₃, ZrO₂, TiO₂ oder Mischoxiden davon und einer metallischen Komponente aus Ti, Si, Al, Mo, Zr, Cu, Nb, Co, Cr, W, Ta, Ni, B oder einer Legierung aus wenigstens zwei dieser Metalle. Unter der Bezeichnung Cermets werden im Sinne der vorliegenden Erfindung Verbundwerkstoffe aus einer oxidischen Matrix mit einer darin dispergierten metallischen Komponente verstanden. Ausführungsformen, die solche Verbundwerkstoffe enthalten, werden hier besonders bevorzugt, da sie die optischen Eigenschaften der metallischen Komponente mit der niedrigen elektrischen Leitfähigkeit des Matrixmaterials verbinden und dadurch für die Beschichtung einer erfindungsgemäßen Abdeckplatte besonders gut geeignet sind.

Diese Cermet-Schichtsysteme können sich dadurch auszeichnen, dass sie einen sehr hohen Flächenwiderstand, > 20 MΩ/□, bei einstellbarem Lichttransmissionsgrad von 5 - 70% aufweisen. In diesen Transmissionsbereichen können sehr farbneutrale Schichten mit niedrigem L*-Wert hergestellt werden. Cermet-Schichtsysteme zeigten insbesondere bei hohen Transmissionsgraden von >20% Farborte mit a*- und b*-Werten in einem Bereich von +/- 2, im Einzelfall auch deutlich darunter. Der mittlere spektrale Reflexionsgrad von Cermet-Beschichtungen mit einem Lichttransmissionsgrad von 35 % kann bei 5 % mit einem Verhältnis von größtem zu kleinstem Wert im sichtbaren Spektralbereich von ca. 1,5 liegen. Der Transmissionsverlauf solcher Schichten hat sich als sehr flach erwiesen, so dass Licht der Normlichtart D65 nach Durchtritt durch die Beschichtung im Weißbereich W1 oder sogar im Weißbereich W2 lag. Im infraroten Spektralbereich zwischen 780 und 4250 nm weisen diese Cermet-Schichtsysteme nur eine schwache Absorption auf, sodass auch hier der spektrale Transmissionsgrad in weiten Bereichen durch das Substrat und nicht durch die Beschichtung limitiert wird. Die untersuchten Cermet-Schichten können bei einer Wellenlänge von ca. 3.750 nm einen Transmissionsgrad von mehr als 40 % aufweisen.

In einer bevorzugten Ausführungsform werden oxidische Matrix und metallische Komponente so aufeinander abgestimmt, dass sie eine erhöhte thermische Stabilität aufweisen. Die thermische Stabilität kann beispielsweise durch Messung des CIELAB-Farbortes nach einer Belastung der Probe bei 380 °C für 80 Stunden und einem Vergleich der Messwerte mit der unbelasteten Probe erfolgen. Besonders vorteilhaft ist dabei eine Materialpaarung von sauerstoffaffinem Metall zur Bildung der Metalloxidmatrix und einem weniger sauerstoffaffinen Metall für die Bildung der metallischen Komponente im Cermet.

Besonders bevorzugt werden SiO₂ oder Al₂O3 als die Metalloxidmatrix in Kombination mit Mo als die metallische Komponente. Si bzw. Al haben eine höhere Sauerstoffaffinität als Mo, wodurch die Bildung von SiO₂ bzw. Al₂O₃ gegenüber Mo-Oxid bevorzugt ist. Gleichzeitig wirkt bei sehr dichten Schichten die oxidische Matrix als Oxidationsbarriere und schützt das Mo vor Oxidation. Auch Mischoxide, insbesondere aus SiO₂ und Al₂O₃, sind für die Verwendung als Metalloxidmatrix geeignet.

In einer bevorzugten Ausführungsform wird SiO₂ für die oxidische Matrix verwendet. Dann kann das Verhältnis von Mo zu Si in der Beschichtung mindestens 5:95, bevorzugt mindestens 10:90, besonders bevorzugt 15:85 und insbesondere 20:80 in Gew.-% betragen. Dabei kann es vorzugsweise höchstens 50:50, bevorzugt höchstens 45:55, besonders bevorzugt höchstens 40:60 und insbesondere höchstens 35:65 in Gew.-% betragen. Das Verhältnis von Mo zu Si in der Beschichtung kann also beispielsweise in einem der Bereich 5:95 bis 50:50 Gew.-%, 10:90 bis 45:55 Gew.-%, 15:85 bis 40:60 Gew.-% oder sogar 20:80 bis 35:65 Gew.-% liegen. Zur Bestimmung dieser Verhältnisse werden die Gewichtsanteile von Mo und Si in der Beschichtung verwendet. Der Gewichtsanteil von Sauerstoff oder anderen Bestandteilen der Beschichtung wird dabei nicht berücksichtigt. Der Fachmann wird den Anteil an Sauerstoff so einstellen, dass die Beschichtung den jeweiligen Anforderungen genügt.
In einer besonders bevorzugten Ausführungsform enthält die Beschichtung außer Mo, Si, Sauerstoff und unvermeidbaren Verunreinigungen keine weiteren Bestandteile.

Die Verwendung solcher MoSiOₓ-Cermets hat sich als besonders vorteilhaft herausgestellt, da diese einen besonders flachen Transmissionsverlauf und einen besonders flachen Verlauf des spektralen Reflexionsgrades aufweisen und gleichzeitig einen hohen elektrischen Widerstand und eine hohe thermische Beständigkeit.

Zur thermischen Stabilisierung können Cermets, wie auch Spinelle, zusätzlich mit einer Oxidationsbarriere versehen werden. Dies können z.B. sein: Oxide oder Nitride oder Oxinitride aus zumindest einem der folgenden Materialien Si, Al, Ti, Zr, Sn, Cr, Zn, Nb, Y, Ta, Mo, B. Für Cermets hat sich insbesondere Siliziumnitrid als bevorzugte Oxidationsbarriere erwiesen, für Spinelle insbesondere Siliziumoxid. Oxidationsbarriereschichten können sich auch positiv auf die Transmission im Infraroten auswirken.

Die Erfinder haben herausgefunden, dass es überraschenderweise möglich ist, mit Beschichtungen aus Carbiden und Carbonitriden auf Glas oder Glaskeramik niedrige L*-Werte im Bereich von 30 bei einem Farbort von -3 < a* < 3, -3 < b* < 3 in Remission herzustellen. Darüber hinaus weisen die Schichten einen mittleren Reflexionsgrad von ca. 4 % bis 8% und ein Verhältnis von maximalem zu minimalen Reflexionsgrad im sichtbaren Spektralbereich von ca. 1,5 auf. Im infraroten Spektralbereich transmittieren diese Schichten bereits bei 950 nm mehr als 50% und weisen im Bereich ca. 1.250 nm bis mindestens 4.000 nm keine nennenswerte Absorption auf, so dass in diesem Bereich die spektrale Transmission einer Abdeckplatte durch das Substrat limitiert wird.

Diese Schichtsysteme können als Einzelschichten oder als Schichtsystem mit den schon für Spinelle beschriebenen Ausgleichsschichten zwischen Substrat und Beschichtung und/ oder mit zusätzlicher Oxidationsbarrieren hergestellt werden. Der Fachmann wird dabei aus den oben beschriebenen Materialien eine Kombination mit passendem Brechungsindex, der zwischen dem des Substrats und dem der Beschichtung liegt, und einer passenden Schichtdicke auswählen. Bei der Verwendung von Schichten auf Basis von Carbiden oder Carbonitriden ist vorzugsweise zumindest eines der folgenden Materialien in der Beschichtung enthalten: Si, Zr, W, Ti, Mo, Cr, B, DLC.

Alle genannten Schichtsysteme werden vorzugsweise mittels Magnetronsputtern, insbesondere mittels reaktiven Mittelfrequenzsputtern oder Hochfrequenzsputtern hergestellt. Beim reaktiven Mittelfrequenzsputtern können metallische Targets, beispielsweise aus reinen Metallen oder aus Legierungen, zum Einsatz kommen und als reaktive Prozessgase beispielsweise Sauerstoff oder Stickstoff zugeführt werden. Als nichtreaktives Prozessgas wird Argon verwendet.

Spinellbeschichtungen können beispielsweise mittels reaktivem Mittelfrequenzsputtern hergestellt werden, indem ein Target aus einer Legierung der Metallkationen, insbesondere ein Target aus einer CoFeMnCr-Legierung, verwendet wird und Sauerstoff als Reaktivgas verwendet wird. Über die Menge des zugegebenen Sauerstoffs lässt sich dabei die Stöchiometrie der Beschichtung variieren und insbesondere auch unterstöchiometrisch, also mit Sauerstoffmangel, einstellen. Besonders bevorzugt wird für die Targetlegierung ein Zusammensetzungsbereich in Gew.-% von

| | |
|---|---|
| Co | 15-25, insbesondere 19-21, |
| Fe | 30-40, insbesondere 34-36, |
| Mn | 14-24, insbesondere 18-20 und |
| Cr | 21-31, insbesondere 25-27 verwendet |

Das molare Verhältnis der Zusammensetzung des Targets entspricht auch den molaren Anteilen von Co, Fe, Mn und Cr in der Beschichtung.

In einer bevorzugten Ausführungsform weist das Trennelement im Bereich der Aussparung eine hohe Transmission im infraroten Spektralbereich auf. Dies ermöglicht die Positionierung von infrarotdetektierenden Sensoren im Innenbereich des erfindungsgemäßen Gegenstandes oder die Verwendung von Strahlungsheizelementen wie Infrarotstrahlern. Je nach Sensor oder Heizelement ist dabei die Transmission in einem speziellen Spektralbereich wichtig.

Die angegebenen Transmissionswerte beziehen sich auf die Gesamttransmission der Probe, gemessen unter Verwendung einer Ulbrichtkugel. Für diese Messung wird die Probe zwischen einer geeigneten Lichtquelle und einer Ulbrichtkugel am Eingang der Ulbrichtkugel positioniert. An einen seitlich, unter einem Winkel von 90° zum Strahlengang angeordneten Ausgang der Ulbrichtkugel ist ein geeigneter Sensor zur Detektion des transmittierten Lichtanteils angebracht. Durch diese Messanordnung wird sowohl der direkt transmittierte Anteil als auch der streuend transmittierte Anteil des Lichts detektiert.

Für siliziumbasierte Infrarot-Sensoren, wie sie beispielsweise in sogenannten Time-of-flight Sensoren für berührungslose Eingabegeräte für die Gestensteuerung oder Annäherungserkennung, wie dem VL6180X von ST Microelectronics, verwendet werden, ist der Spektralbereich zwischen 850 und 1000 nm besonders relevant. In diesem Bereich weist das Trennelement bevorzugt bei wenigstens einer Wellenlänge eine Transmission von wenigstens 3 %, bevorzugt wenigstens 10 %, besonders bevorzugt wenigstens 30 % auf, um den Einsatz solcher Sensoren zu ermöglichen. Besonders für die Gestensteuerung sind hohe Transmissionen von Vorteil, weil dann Gesten in größerem Abstand von der Außenseite des Trennelements detektiert werden können. Andere Anwendungen für siliziumbasierte Infrarot-Sensoren sind beispielsweise Empfänger für die Signale von Fernbedienungen oder Kommunikationsschnittstellen für die optische Datenübertragung.

InGaAs-basierte Infrarot-Detektoren sind insbesondere im Bereich zwischen 1 und 2 µm empfindlich. Für den Einsatz solcher Detektoren ist das Trennelement geeignet, wenn es im Bereich der Aussparung bei wenigstens einer Wellenlänge, bevorzugt bei einer Wellenlänge von 1600 nm, eine Transmission von wenigstens 30 %, vorzugsweise wenigstens 45 %, besonders bevorzugt wenigstens 60 % aufweist.

Das Emissionsmaximum eines Strahlungsheizelementes ergibt sich aus dem Wienschen Verschiebungsgesetz und liegt für Temperaturen zwischen 100 °C und 1000 °C zwischen 7,8 µm und 2,3 µm. Aus Gründen der Energieeffizienz und um ein übermäßiges Aufheizen des Trennelements durch ein Strahlungsheizelement zu verhindern, weist das Trennelement im Bereich zwischen 3,25 µm und 4,25 µm bei wenigstens einer Wellenlänge eine Transmission von wenigstens 10 %, bevorzugt wenigstens 20 %, besonders bevorzugt wenigstens 30 % auf. In diesem spektralen Bereich kann auch mit im Innenraum des Gegenstandes angeordneten Bolometern oder Thermosäulen die Temperatur eines heißen Objektes im Außenbereich, beispielsweise einem heißen Kochgefäß, gemessen werden, wenn die Transmission des Trennelements die genannten Mindestanforderungen erfüllt.

In einer bevorzugten Ausführungsform liegt die Dicke des Glas- oder Glaskeramiksubstrats zwischen 2 mm und 12 mm, bevorzugt zwischen 3 und 8 mm, besonders bevorzugt zwischen 3 und 6 mm. Die Dicke des Substrates wird dabei im Wesentlichen von den Anforderungen an die mechanische Beständigkeit und das Gewicht limitiert. Gläser, die dünner als 2 mm sind, können aus technischen Gründen in der Praxis nicht thermisch vorgespannt werden, da die hierfür erforderlichen Kühlraten nicht mit wirtschaftlich vertretbarem Aufwand erreicht werden können. Weiterhin muss beachtet werden, dass die Dicke des Substrates Auswirkung auf seine optischen Eigenschaften haben kann. Die Dicke ist in jedem Fall so zu wählen, dass die genannten Grenzwerte der Transmission eingehalten werden.

Die Erfinder haben festgestellt, dass ein zusätzlicher vorteilhafter Effekt auftritt, wenn das Trennelement so gewählt wird, dass der Farbort von Licht der Normlichtart D65 nach Durchtritt durch das Trennelement im Bereich der Aussparung, also auch nach Durchtritt durch das Glas- oder Glaskeramiksubstrat, innerhalb des oben genannten Weißbereichs W1 liegt: Überraschenderweise lässt sich mit solchen Trennelementen ein verbesserter Dead-Front-Effekt erzielen. Dies gelingt unabhängig davon, ob die Transmission des Trennelements durch Zugabe entsprechender färbender Komponenten oder über eine Beschichtung eingestellt wird.

Unter dem Dead-Front-Effekt wird der Effekt verstanden, dass im Innern eines erfindungsgemäßen Gegenstands angeordnete elektronische Bauteile im ausgeschalteten Zustand im Außenbereich nicht sichtbar sind, dass aber Licht, dass von eingeschalteten Bauteilen wie Anzeigeeinrichtungen, Leuchtelementen oder gegebenenfalls Heizelementen ausgesendet wird, mit ausreichender Helligkeit durch das Trennelement hindurchtreten und dadurch im Außenbereich wahrgenommen werden kann. Hierfür muss das Trennelement einerseits eine möglichst niedrige Transmission aufweisen, um den Blick auf die Bauteile zu verhindern, andererseits muss es eine möglichst hohe Transmission aufweisen, um das von Bauteilen emittierte Licht möglichst wenig abzuschwächen.

Dies ist beispielsweise bei den im Stand der Technik bekannten eingefärbten Glaskeramiken für Kochfelder besonders schwierig zu erreichen, da diese aufgrund des vorwiegend zur Färbung verwendeten V₂O₅ einen sehr inhomogenen Transmissionsverlauf aufweisen, der im roten Spektralbereich eine viel höhere Transmission aufweist, als im blauen Spektralbereich. Um aber beispielsweise blaues Licht von Leuchtelementen im Inneren des Kochfeldes nicht zu stark abzuschwächen, muss demnach die Gesamttransmission relativ hoch gewählt werden, was wiederrum zu einer sehr hohen Transmission und damit schlechtem Dead-Front-Effekt im roten Spektralbereich führt. So liegt bei einer typischen aus dem Stand der Technik bekannten eingefärbten Glaskeramik mit einem Lichttransmissionsgrad von 5,6 % der spektrale Transmissionsgrad im blauen Spektralbereich von 450 bis 500 nm bei ca. 2,5 - 3 %, wohingegen er im roten Spektralbereich von 630 bis 680 nm zwischen ca. 15 und 30 % liegt. Dies hat zur Folge, dass sowohl blaues als auch rotes Licht zwar in ausreichendem Maße durch die Glaskeramik hindurchtreten kann, dass aber im roten Spektralbereich kein ausreichender Dead-Front-Effekt vorliegt, da die Bauteile im ausgeschalteten Zustand bei einer Transmission von 15 bis 30 % deutlich, wenn auch nur in roter Farbe, im Außenbereich wahrgenommen werden können.

Erfindungsgemäße Trennelemente weisen hingegen einen sehr viel flacheren Verlauf der Transmissionskurve auf. So weist beispielsweise ein erfindungsgemäßes Trennelement mit einem Lichttransmissionsgrad von 20,4 % im Bereich der Aussparung ein Verhältnis von höchstem zu niedrigstem spektralen Transmissionsgrad im Bereich von 470 bis 630 nm von lediglich 1,1 auf, wobei der höchste Transmissionswert bei 470 nm und der niedrigste bei 572 nm liegt (siehe Beispiel 10 in Tabelle 2). Durch diesen spektralen Verlauf wird nicht nur erreicht, dass Licht der Normlichtart D65 nach Transmission im Weißbereich W1 liegt, sondern zusätzlich, dass Licht aller Wellenlängen ausreichend durch das Trennelement hindurchtreten kann, aber in keinem Spektralbereich so hohe Transmissionen auftreten, dass der Dead-Front-Effekt negativ beeinflusst wird. Bevorzugt weist das Trennelement im Bereich der Aussparung ein Verhältnis des höchsten zum niedrigsten spektralen Transmissionsgrades im Wellenlängenbereich von 470 bis 630 nm von höchstens 2,5, bevorzugt höchstens 2, weiter bevorzugt höchstens 1,8 auf.

Anders ausgedrückt, können im Vergleich zum Stand der Technik beispielsweise die folgenden Vorteile erzielt werden. Bei gleicher Transmission im blauen Spektralbereich kann ein niedrigerer Lichttransmissionsgrad des Trennelements gewählt werden und somit ein insgesamt besserer Dead-Front-Effekt erzielt werden. Alternativ kann bei gleichem Lichttransmissionsgrad eine höhere Transmission im blauen Spektralbereich und somit bessere Sichtbarkeit von beispielsweise blauen Leuchtelementen und gleichzeitig ein besserer Dead-Front-Effekt erzielt werden. Als weitere Alternative kann bei vergleichbarem Dead-Front-Effekt ein höherer Lichttransmissionsgrad erzielt werden, was beispielsweise für die Energieeffizienz des erfindungsgemäßen Gegenstandes vorteilhaft sein kann.

Der Dead-Front-Effekt kann durch die Messung eines prozentualen Grauwertunterschiedes mit der im Folgenden beschriebenen Messmethode bestimmt werden.

Eine Grauwertmesseinrichtung dient zur Bestimmung prozentualer Grauwerte, insbesondere, um Graustufenunterschiede zwischen verschiedenen Bereichen bestimmen zu können. Der Messaufbau befindet sich in einer Dunkelkammer, um Fremdlicht ausschließen zu können.

In der Dunkelkammer sind zwei RAL-Karten platziert. Die erste RAL-Karte hat die RAL-Farbe 9017 (verkehrsschwarz) und die zweite RAL-Karte hat die RAL-Farbe 7012 (basaltgrau). Neben diesen RAL-Karten werden das zu vermessende Trennelement mit Abdeckmittel und Anzeigeeinrichtung platziert.

In einem Abstand d, welcher beispielsweise 606 Millimeter beträgt, ist eine Kamera mit einem Objektiv angeordnet. Optional kann vor dem Objektiv ein Filter, beispielsweise ein Langpassfilter oder ein Tristimulus-Filter, angebracht sein.

Bei der verwendeten Messvorrichtung kommen folgende Komponenten zum Einsatz: Die Kamera ist ausgebildet als eine acA1920 - 40µm / Graustufenkamera der Basler AG und das Objektiv ist ausgebildet als LM35HC Megapixel der Kowa GmbH.

Es wird kein optionaler Filter vor dem Objektiv verwendet.

Die Anzeigefläche der Anzeigeeinrichtung weist einen CIELAB-Farbort in Remission von L* = 27,5, a* = -0,7 und b* = 0,4 auf. Das verwendete Abdeckmittel weist bei direkter Messung, also nicht durch ein Glas- oder Glaskeramiksubstrat hindurch gemessen, einen CIELAB-Farbort in Remission gegen Schwarzfalle von L* = 28,8, a* = -0,6 und b* = -1,5 auf.

Insbesondere werden folgende Einstellungen der Kamera eingesetzt, welche von dem mit der genannten Graustufenkamera befassten Fachmann aus der zugehörigen Protokolldatei entnommen sind:

| | |
|---|---|
| • Width | 1920 |
| • Height | 1200 |
| • OffsetX | 8 |
| • OffsetY | 8 |
| • CenterX | 0 |
| • CenterY | 0 |
| • BinningHorizontal | 1 |
| • BinningVertical | 1 |
| • ReverseX | 0 |
| • ReverseY | 0 |
| • PixelFormat | Mono8 |
| • TestImageSelector | Off |
| • GainAuto | Off |
| • GainSelector | All |
| • Gain | 0.00000 |
| • GainSelector | All |
| • BlackLevelSelector | All |
| • BlackLevel | 0.00000 |
| • BlackLevelSelector | All |
| • Gamma | 1.00000 |
| • RemoveParameterLimitSelector | Gain |
| • RemoveParameterLimit | 0 |
| • RemoveParameterLimitSelector | Gain |
| • ExposureAuto | Off |
| • ExposureMode | Timed |
| • ExposureTime | 550000.0 |
| • AcquisitionBurstFrameCount | 1 |
| • TriggerSelector | FrameBurstStart |
| • TriggerMode | Off |
| • TriggerSelector | FrameStart |
| • TriggerMode | Off |
| • TriggerSelector | FrameStart |
| • TriggerSelector | FrameBurstStart |
| • TriggerSource | Line1 |
| • TriggerSelector | FrameStart |
| • TriggerSource | Line1 |
| • TriggerSelector | FrameStart |
| • TriggerSelector | FrameBurstStart |
| • TriggerActivation | RisingEdge |
| • TriggerSelector | FrameStart |
| • TriggerActivation | RisingEdge |
| • TriggerSelector | FrameStart |
| • TriggerDelay | 0 |
| • AcquisitionFrameRateEnable | 0 |
| • AcquisitionFrameRate | 100.00000 |
| • DeviceLinkSelector | 0 |
| • DeviceLinkThroughputLimit | 360000000 |
| • DeviceLinkSelector | 0 |
| • DeviceLinkSelector | 0 |
| • DeviceLinkThroughputLimitMode | On |
| • DeviceLinkSelector | 0 |
| • ChunkSelector | Gain |
| • ChunkEnable | 0 |
| • ChunkSelector | ExposureTime |
| • ChunkEnable | 0 |
| • ChunkSelector | Timestamp |
| • ChunkEnable | 0 |
| • ChunkSelector | LineStatusAll |
| • ChunkEnable | 0 |
| • ChunkSelector | CounterValue |
| • ChunkEnable | 0 |
| • ChunkSelector | PayloadCRC16 |
| • ChunkEnable | 0 |
| • ChunkSelector | Timestamp |
| • ChunkModeActive | 0 |
| • AutoTargetBrightness | 0.30196 |
| • AutoFunctionProfile | MinimizeGain |
| • AutoGainLowerLimit | 0.00000 |
| • AutoGainUpperLimit | 36.00000 |
| • AutoExposureTimeLowerLimit | 76.0 |
| • AutoExposureTimeUpperLimit | 1000000.0 |

In der Dunkelkammer befinden sich zudem LED-Spots der OSRAM Licht AG mit Farbtemperatur 4000K, EAN: 4052899944282. Die LED-Spots sind so eingestellt, dass auf dem Glas- oder Glaskeramiksubstrat eine Helligkeit von 1200 Lux herrscht. Generell kann unabhängig vom jeweiligen Leuchtmittel, soweit dieses eine für Haushalte übliche Farbtemperatur und/oder spektrale Intensitätsverteilung aufweist, auch eine andere Lichtquelle, wie beispielsweise ein Schwarzkörperstrahler, insbesondere eine handelsübliche Halogenlichtquelle, verwendet werden, soweit diese eine Helligkeit von etwa 1200 Lux erzeugen. Hiermit wird eine Beleuchtungssituation erzielt, die für Küchen und Labore typisch ist. Hinzuweisen ist darauf, dass die mittels der Grauwertmesseinrichtung bestimmten Messwerte von der Helligkeit im Wesentlichen unabhängig sind, so dass auch eine andere Beleuchtung vorgesehen sein kann.

Für die Messung wird das Beleuchtungssystem eingeschaltet und die Dunkelkammer geschlossen. Mit der Kamera wird ein Graustufenbild der Situation aufgenommen. Mit anderen Worten wird mittels der Grauwertmesseinrichtung ein Graustufenbild erzeugt, welches zumindest folgendes abbildet: Die Anzeigefläche der Anzeigeeinrichtung im ausgeschalteten Zustand durch das Trennelement hindurch betrachtet, das Abdeckmittel durch das Trennelement hindurch betrachtet, die RAL-Karte mit RAL-Farbe 9017 und die RAL-Karte mit RAL-Farbe 7012.

Basierend auf dem erzeugten Graustufenbild stellt die Grauwertmesseinrichtung einen Messwert M₁ bereit, welcher der Anzeigefläche der Anzeigeeinrichtung im ausgeschalteten Zustand, durch das Trennelement hindurch betrachtet, entspricht.

Ferner stellt die Grauwertmesseinrichtung einen Messwert M₂ bereit, welcher dem Abdeckmittel, durch das Trennelement hindurch betrachtet, entspricht.

Darüber hinaus stellt die Grauwertmesseinrichtung zwei weitere Messwerte bereit, welche den beiden RAL-Karten entsprechen.

Bei der verwendeten Grauwertmesseinrichtung wird das Graustufenbild mit Hilfe der Bildauswertungssoftware Halcon SDK Industry 12 der MVTec Software GmbH ausgewertet. Es hat sich gezeigt, dass die Messung unabhängig von den Belichtungsbedingungen und der Helligkeit der Beleuchtung ist, vorausgesetzt das Bild ist nicht unter- oder überbelichtet. Über eine Auswerteroutine in der Software können auf dem Bild verteilt diverse Messfenster auf ihre Graustufen hin ausgewertet werden. In jedem Messfenster kann der Mittelwert der Grauwerte aller Pixel über die Messfläche inklusive der Standardabweichung gemessen und festgehalten werden. Mit anderen Worten können die Messwerte M₁, M₂ und die Messwerte der RAL-Karten als Mittelwerte über Messbereiche gebildet sein, wobei die Messbereiche jeweils mindestens eine Fläche von 0,2 cm², vorzugsweise 0,9 cm² aufweisen.

Basierend auf den gemessenen Messwerten M₁, M₂ und den Messwerten der beiden RAL-Karten, welche jeweils absolute Werte darstellen, werden prozentuale Grauwerte G₁ und G₂ berechnet. Mit anderen Worten, werden relative Kontraste in Prozent berechnet, um Messungen vergleichbar zu machen.

Dazu wird eine lineare Funktion G dadurch definiert, dass diese lineare Funktion dem Messwert, welcher der RAL-Karte mit RAL-Farbe 9017 entspricht, einen prozentualen Grauwert von 20 % zuordnet und dem Messwert, welcher der RAL-Karte mit RAL-Farbe 7012 entspricht prozentualen Grauwert von 90 % zuordnet. Mit anderen Worten werden die Messwerte der RAL-Karten 9017 als 20 % und 7012 als 90 % referenziert, worüber eine lineare Umrechnung für alle gemessenen Grauwerte definiert wird.

Mit der linearen Funktion G=G(M), welche absolute Messwerte in prozentuale Grauwerte umrechnet, werden die prozentualen Grauwerte G₁ und G₂ berechnet als G₁=G(M₁) und G₂=G(M₂).

Optional können in der Dunkelkammer auch zusätzlich weitere RAL-Karten vorgesehen sein, beispielsweise mit RAL-Farbe 9003 (signalweiß), RAL-Farbe 9006 (weißaluminium), RAL 9005 (tiefschwarz) und/oder RAL-Farbe 7038 (achatgrau). Die RAL-Karten können ferner auch von dem Trennelement zumindest partiell überdeckt sein.

Die Differenz der beiden gemessenen prozentualen Grauwerte |G₁-G₂| ist ein Maß für den Dead-Front-Effekt. Es hat sich herausgestellt, dass Werte unterhalb von 5,0 % von dem menschlichen Auge kaum noch wahrnehmbar sind. Mit anderen Worten wird ein Dead-Front-Effekt erreicht. Für einen noch besseren Dead-Front-Effekt ist es bevorzugt, wenn die Grauwertdifferenz geringer ist als 3,5 %, noch bevorzugter geringer ist als 2,5 % und besonders bevorzugt geringer ist als 1,5 %. Zur Bestimmung dieser Werte wurde eine statistische Analyse mit unterschiedlichen Beobachtern durchgeführt.

In einer bevorzugten Ausführungsform weist der erfindungsgemäße Gegenstand zwischen einem prozentualen Grauwert G₁ des Gegenstandes im Bereich der Aussparung des Abdeckmittels bei ausgeschalteter Anzeigeeinrichtung und einem prozentualen Grauwert G₂ des Gegenstandes im Bereich des Abdeckmittels ohne Aussparung ein Unterschied |G₁-G₂| von weniger als 5,0 %, bevorzugt von weniger als 3,5%, besonders bevorzugt von weniger als 2,5 % und ganz besonders bevorzugt von weniger als 1,5 % auf. Vorzugsweise wird diese Grauwertdifferenz bei einem Lichttransmissionsgrad des Trennelements im Bereich der Aussparung des Abdeckmittels von wenigstens 5 %, bevorzugt wenigstens 9 %, besonders bevorzugt wenigstens 15 %, ganz besonders bevorzugt wenigstens 20 % erreicht.

Eine weitere Möglichkeit den Dead-Front-Effekt zu quantifizieren, besteht darin, das Trennelement ohne das Abdeckmittel auf einen schwarzen und auf einen weißen Untergrund zu legen und für beide Untergründe wie ansonsten oben beschrieben den Farbort im CIELAB Farbraum zu messen. Aus den Messwerten kann der maximale Farbabstand $Δ E = \sqrt{{\left({L}_{schwarz}^{∗}-{L}_{wei ß}^{∗}\right)}^{2} + {\left({a}_{schwarz}^{∗}-{a}_{wei ß}^{∗}\right)}^{2} + {\left({b}_{schwarz}^{∗}-{b}_{wei ß}^{∗}\right)}^{2}}$ berechnet werden. Dabei weist das Trennelement vorzugsweise einen Farbabstand von ΔE < 35, bevorzugt < 10, besonders bevorzugt <6, auf.

Dieser Wert hängt auch vom Lichttransmissionsgrad der Probe ab und nimmt mit zunehmendem Lichttransmissionsgrad zu. In einer bevorzugten Ausführungsform beträgt der Quotient von Farbabstand zu Lichttransmissionsgrad weniger als 1,5, bevorzugt weniger als 1, besonders bevorzugt weniger als 0,8 für einen Lichttransmissionsgrad von mehr als 5 %.

Noch eine weitere Möglichkeit den Dead-Front-Effekt zu quantifizieren, besteht darin, die spektrale Reflektivität R₁(λ) der Anzeigefläche der Anzeigeeinrichtung im ausgeschalteten Zustand durch das Trennelement hindurch und spektrale Reflektivität R₂(λ) des Abdeckmittels im Spektralbereich 400 bis 700 nm durch das Trennelement hindurch zu messen, beispielsweise mittels eines Lambda 850 UV/VIS Spektrophotometers der Firma PerkinElmer.

Aus den beiden gemessenen spektralen Reflektivitäten kann gemäß der Formel ${ρ}_{i} = \frac{{\int }_{{S}_{1}}^{{S}_{2}} {R}_{i} \left(λ\right) dλ}{{\int }_{{S}_{1}}^{{S}_{2}} dλ}$ mit S₁ = 400 nm und S₂ = 700 nm das Rückstrahlvermögen ρᵢ (i=1,2) berechnet werden. Der Unterschied der Rückstrahlvermögen |ρ₁- ρ₂| beträgt in einer bevorzugten Ausführungsform weniger als 3 %, bevorzugt weniger als 1,5 %.

In einer bevorzugten Ausführungsform, weist das Glas- oder Glaskeramiksubstrat im Bereich der Anzeigeeinrichtung eine zur Erhöhung der Anzeigequalität angepasste Oberflächenqualität auf. Beispielsweise kann die dem Außenbereich des erfindungsgemäßen Gegenstandes zugewandte Seite poliert sein und somit eine sehr geringe Oberflächenrauheit aufweisen, wodurch in vorteilhafter Weise die Streuung des von der Anzeigeeinrichtung emittierten Lichtes an dieser Oberfläche minimiert wird. Auf diese Weise können mit einer Anzeigeeinrichtung besonders hohe Kontrastwerte erzielt werden.

Alternativ kann es auch vorteilhaft sein, die dem Außenbereich zugewandte Oberfläche beispielsweise mittels Walzen, Ätzen oder einer Anti-Glare-Beschichtung gezielt zu strukturieren, um den Anteil des gestreuten Lichts zu erhöhen. Dies kann den Vorteil haben, Reflexionen an der Außenseite zu minimieren und somit eine bessere Sichtbarkeit der Anzeigeeinrichtung zu ermöglichen.

In einer weiteren bevorzugten Ausführungsform ist das Glas- oder Glaskeramiksubstrat zumindest im Bereich der Anzeigeeinrichtung so optimiert, dass es eine möglichst geringe Streuung für sichtbares Licht verursacht. Hierzu zählt beispielsweise, dass das Substrat weniger als 3 Blasen pro kg Glas oder Glaskeramik, bevorzugt weniger als 2 Blasen pro kg, besonders bevorzugt weniger als 1 Blase pro kg, bezogen auf eine Blasengröße von mindestens 100 µm im Durchmesser aufweist. Darüber hinaus ist es vorteilhaft, wenn das Substrat aus Glaskeramik besteht, dass es eine möglichst niedrige intrinsische Lichtstreuung an den enthaltenen Kristalliten aufweist. Dies ist insbesondere dann der Fall, wenn die Kristallite eine durchschnittliche Größe von weniger als 250 nm im Durchmesser aufweisen und der Brechzahlunterschied zwischen kristalliner Phase und Restglasphase möglichst gering ist. Beide Parameter können durch die Wahl der Materialzusammensetzung und die Keramisierungsbedingungen, insbesondere die Steigung der Temperaturrampen, Dauer der Keramisierung und maximale Temperatur während der Keramisierung stark beeinflusst werden.

Bevorzugt weist das Trennelement im sichtbaren Spektralbereich einen Haze von höchstens 5 %, bevorzugt höchstens 2 %, besonders bevorzugt höchstens 1 % auf. Unter dem Haze ist dabei gemäß der Norm ASTM D1003, der Anteil des durch eine Probe transmittierten Lichts zu verstehen, der durch Streuung um einen Winkel von mehr als 2,5 ° gegenüber der optischen Achse des auf die Probe eingestrahlten Lichts der Lichtart CIE-C abgelenkt wird. Der Haze kann beispielsweise mit dem Messgerät haze-gard der Firma BYK gemäß der Norm ASTM D1003 gemessen werden. Bei einem Haze von höchstens 5 % ist eine besonders gute Sichtbarkeit der Anzeigeeinrichtung gewährleistet.

Alternativ oder ergänzend weist das Trennelement vorzugsweise eine Clarity im sichtbaren Spektralbereich von mindestens 90 %, bevorzugt mindestens 95 %, ganz besonders bevorzugt mindestens 98% auf. Unter der Clarity ist dabei gemäß der Norm ASTM D1003, der Anteil des durch eine Probe transmittierten Lichts zu verstehen, der durch Streuung um einen Winkel von weniger oder gleich 2,5 ° gegenüber der optischen Achse des auf die Probe eingestrahlten Lichts der Lichtart CIE-C abgelenkt wird. Die Clarity kann beispielsweise mit dem Messgerät haze-gard der Firma BYK gemäß der Norm ASTM D1003 gemessen werden.

Ausführungsbeispiele von transparenten eingefärbten Glaskeramiken die für die Verwendung in erfindungsgemäßen Gegenständen geeignet sind, sowie Vergleichsbeispiele sind in den Tabellen 1 bis 4 angegeben.

Die Tabellen 1 und 3 zeigen die Grundzusammensetzungen kristallisierbarer Gläser und deren Eigenschaften im glasigen Zustand, also vor der Keramisierung.

Die Tabelle 2 enthält im Bereich "Dotierungen" die im jeweiligen Ausgangsglas enthaltenen Färbezusätze sowie einige ausgewählte Eigenschaften der resultierenden Glaskeramiken. Alle Beispiele in Tabelle 2 basieren auf der Grundzusammensetzung des Glases in Tabelle 1.

Die Tabelle 4 enthält einige ausgewählte Eigenschaften der resultierenden Glaskeramiken. Diese basieren auf den Grundzusammensetzungen der Gläser in Tabelle 3.

Tabelle 1 zeigt eine Grundzusammensetzung für kristallisierbare Gläser und ihre Eigenschaften. Die Grundzusammensetzung Basisglas 1 entspricht bis auf die farbgebenden Bestandteile dem Vergleichsglas 1 nach dem Stand der Technik außerhalb der Erfindung. In Tabelle 1 sind auch die Eigenschaften im glasigen Zustand Transformationstemperatur Tg [°C], Verarbeitungstemperatur V_{A}[°C], 10²-Temperatur [°C] und obere Entglasungsgrenze OEG [°C] aufgeführt. Zur Messung der OEG werden die Gläser in Pt/Rh10-Tiegeln geschmolzen. Anschließend werden die Tiegel für 5 Stunden bei verschieden Temperaturen im Bereich der Verarbeitungstemperatur gehalten. Die oberste Temperatur, bei der die ersten Kristalle an der Kontaktfläche der Glasschmelze zur Tiegelwand auftreten, bestimmt die OEG.

Den Gemengerohstoffen dieser Grundzusammensetzung werden unterschiedliche Gehalte färbender Verbindungen zugesetzt und neue Gläser geschmolzen. Durch Zusatz der Komponente MoO₃ werden erfindungsgemäße Zusammensetzungen erhalten. Die so erhaltenen Gläser in Tabelle 2 haben die Grundzusammensetzung von Glas 1 und unterscheiden sich nur in den angegebenen färbenden Verbindungen und optional reduzierenden Zusätzen. Sie werden mit den in der Tabelle 2 aufgeführten Keramisierungsprogrammen kristallisiert. Die Transmissions-Eigenschaften der erhaltenen Glaskeramiken sind aufgeführt. Auch die mit Röntgenbeugung gemessene Hauptkristallphase ist aufgeführt.

Dabei handelt es sich bei den Beispielen 1 und 2 um Vergleichsbeispiele aus dem Stand der Technik (WO/2010/102859 A1), mit einem V₂O₅-Gehalt von 0,023 Gew.-%, die aus dem Glas 1 mit unterschiedlichen Programmen keramisiert wurden.

Das erfindungsgemäße Beispiel 3 enthält weniger als 0,015 Gew.-% V₂O₅. Im Vergleich zu den V₂O₅ freien Beispielen 4-11 verschiebt Bsp. 3 Licht der Normlichtart D65 stärker in Richtung rot, nämlich zu x-Koordinaten >0,4. Im Gegensatz zu den Vergleichsbeispielen 1 und 2 liegt der Wert aber noch im Bereich x < 0,5. Licht das durch die Glaskeramik von Beispiel 3 bei einer Dicke von 4 mm transmittiert wird, liegt im Weißbereich W1, aber aufgrund des V₂O₅-Gehalts nicht innerhalb des Weißbereichs W2.

Tabelle 3 zeigt die Zusammensetzungen weiterer kristallisierbarer Gläser und ausgewählte Eigenschaften. Dabei entspricht das Vergleichsglas 9 mit seiner Zusammensetzung der Glaskeramik KeraVision^{®} der Firma EuroKera. Das mit Fe, V, Mn und Co dotierte Glas erreicht nach Umwandlung in die Vergleichsglaskeramik 12 (Tabelle 4) nicht die erfindungsgemäße geringe Farbe, insbesondere liegt durch eine solche Glaskeramik transmittiertes Licht nicht mehr innerhalb des Weißbereichs W1. Die Beispiele 13 und 14, hergestellt aus den kristallisierbaren Gläsern 10 und 11 sind nicht mit SnO₂, sondern mit As₂O₃ geläutert. Es zeigen sich die beschriebenen Auswirkungen des schwächeren Redoxpartners As. Gegenüber Sn ist die Einfärbung mit MoO₃ deutlich geringer und auch der Zusatz von reduzierenden Verbindungen kann die Helligkeit anders als bei SnO₂-geläuterten Glaskeramiken nicht signifikant verringern.

Bei dem Keramisierungsprogramm 1 wird bis zu einer Temperatur von 600 °C im Keramisierungsofen in 20 min aufgeheizt. Es wird weiter aufgeheizt. Die Gesamtzeit ab Raumtemperatur bis 680 °C beträgt 23 min. Der Temperaturbereich von 680 °C bis 800 °C ist für die Keimbildung wichtig. Daher wird weiter aufgeheizt. Die Gesamtzeit zwischen 680 °C bis 800 °C beträgt 19 min. Oberhalb von ca. 800 °C erfolgt die Kristallisation der gewünschten Hochquarz-Mischkristallphase. Die Gesamtzeit von 800°C bis Erreichen der Maximaltemperatur 918°C beträgt 24 min (Heizrate 5°C/min). Bei der Maximaltemperatur von 918 °C, Haltezeit 10 min, wird die Zusammensetzung von Kristallen und Restglas eingestellt und die Mikrostruktur homogenisiert. Dabei werden die chemischen und physikalischen Eigenschaften der Glaskeramik eingestellt. Das Abkühlen erfolgt bis 800°C gesteuert (Kühlrate 6°C/min), dann wird die Probe auf Raumtemperatur durch Öffnen der Ofentür abgeschreckt; also zusammengefasst:
Keramisierungsprogramm 1 (Keramisierungszeit 96 min):
a) Aufheizen innerhalb von 23 Minuten von Raumtemperatur auf 680°C;
b) Temperaturerhöhung von 680 auf 800°C innerhalb von 19 min, dabei Aufheizen mit 10°C/min auf 730°C, weiteres Aufheizen mit 5°C/min auf 800°C;
c) Temperaturerhöhung von 800°C auf 918°C innerhalb von 24 min und Haltezeit 10 min bei Maximaltemperatur
d) Abkühlen auf 800°C innerhalb 20 min, dann schnelle Abkühlung auf Raumtemperatur.

Bei dem Keramisierungsprogramm 2 ist die Keramisierungszeit verkürzt. Keramisierungsprogramm 2 (Keramisierungszeit 68 min):
a) schnelles Aufheizen von Raumtemperatur auf 740 °C in 26 min,
b) Temperaturerhöhung von 740 bis 825 °C in 18 min (Heizrate 4,7 °C/min),
c) Temperaturerhöhung von 825 °C bis 930 °C in 4 min (Heizrate 26 °C/min), Haltezeit von 4 min bei Maximaltemperatur,
d) Abkühlen auf 800°C innerhalb 16 min, dann schnelle Abkühlung auf Raumtemperatur.

Mit einem zusätzlichen Keramisierungsprogramm 3 erfolgte die Umwandlung in Glaskeramiken mit Keatit-Mischkristallen als Hauptkristallphase. Bei diesem Programm wurde bis 800 °C wie bei Programm 1 verfahren, Dann wurde abweichend von Programm 1 mit einer Heizrate von 5 °C/min auf eine Maximaltemperatur 960 °C mit Haltezeit 10 min erhitzt. Von der Maximaltemperatur wurde mit 6 °C/min auf 800 °C abgekühlt und dann schnell auf Raumtemperatur abgekühlt.

Die mit dem Keramisierungsprogramm 3 hergestellten Glaskeramiken Beispiele 9 und 12 enthalten mit Röntgenbeugung gemessen 79% Keatit-Mischkristalle als Hauptkristallphase. Zugleich sind die Kristallitgrößen mit ca. 120 nm vergrößert, so dass bei der Verwendung von Anzeigeeinrichtungen unterhalb der Glaskeramik störende Streuung auftritt. Die anderen mit den Keramisierungsprogrammen 1 und 2 hergestellten Glaskeramiken enthalten Hochquarz-Mischkristalle mit in der Regel mehr als 90% des Gesamtkristallphasenanteils. Weitere Kristallphasen sind die Keimbildnerphasen ZrTiO4. Zugleich sind die Kristallitgrößen mit weniger als 70 nm so klein, dass bei der Verwendung von Anzeigeeinrichtungen unterhalb der Glaskeramik keine störende Streuung auftritt.

Alle Beispiele mit Ausnahme von Bsp. 6 weisen als Hauptkristallphase Hochquarz-Mischkristall (HQMK) auf.

Die thermische Ausdehnung der Glaskeramiken mit Hochquarz-Mischkristall als Hauptkristallphase liegt bei 0 ± 0,5 •10⁻⁶/K im Bereich von 20-700°C, entspricht also den Anforderungen für temperaturstabile Glaskeramiken.

Die Transmissionsmessungen wurden an polierten Platten mit dem Gerät PerkinElmer Lambda 900 durchgeführt. Die Transmission wurde an Proben mit einer Dicke von 3,5 bis 4,1 mm bestimmt und auf eine Dicke von 4 mm umgerechnet.

Spektrale Transmissionsgrade sind für ausgewählte Wellenlängen angegeben. Aus den gemessenen spektralen Werten im Bereich zwischen 380 nm und 780 nm, der das sichtbare Lichtspektrum repräsentiert, werden die Helligkeit L* und die Farbkoordinaten a*, b* im CIELAB-Farbsystem und die Helligkeit (brightness) Y sowie Farbkoordinaten x, y nach DIN 5033 im CIE-Farbsystem für die gewählte Normlichtart und Beobachterwinkel 2° berechnet. Die Buntheit c* und der Farbabstand d von Licht der Normlichtart D65 nach der Transmission durch eine 4 mm Dicke Probe zu den ursprünglichen Farbkoordinaten von Licht der Normlichtart D65 (x = 0,3127 und y = 0,3290) ist angegeben. Dieser wurde wie folgt berechnet: $d = \sqrt{{\left(x-0,3127\right)}^{2} + {\left(y-0,3290\right)}^{2}} .$ Insbesondere Bsp. 10 mit einem Lichttransmissionsgrad (Y) von 20,4 % in Tabelle 2 verdeutlicht, dass es mit solchen Glaskeramiken möglich ist, Trennelemente herzustellen, die den Farbort von transmittiertem Licht praktisch nicht verschieben. Dieser Farbabstand beträgt für Bsp. 10 lediglich d = 0,003 und ist somit im Rahmen der Messgenauigkeit vernachlässigbar. Der Farbabstand der Vergleichsbeispiele ist um einen Faktor 50 bis 70 schlechter.

Aus dem Verlauf der Transmissionskurve im Bereich von 470 bis 630 nm wurde die Flachheit der Transmission berechnet (Quotient aus höchstem zu niedrigstem Transmissionswert in diesem Bereich). Die Wellenlängen für den maximalen und minimalen Transmissionswert sind ebenfalls angegeben. Die Werte sind für 4 mm dicke polierte Proben angegeben.

Die Streuung der Glaskeramiken wird durch Messung der Trübung (engl. haze) bestimmt. Dabei werden beidseitig polierte 3,5-4,1 mm dicke Proben mit einem kommerziellen Messgerät "haze-guard plus" der Firma BYK Gardener (Norm ASTM D1003-13) mit Normlicht C gemessen. Die Streuung wird durch den Haze-Wert in den Tabellen charakterisiert.

Ergänzend wird an den Proben eine visuelle Begutachtung mit einer handelsüblichen weißen LED vom Typ 7-Segmentanzeige (Hersteller opto devices, Typ OS39D3BWWA) vorgenommen. Die polierten Glaskeramikproben wurden mit einem Abstand von 1 mm auf die weiße LED gelegt und von oben mit einem Abstand von 31 cm im gesamten Winkelbereich, d. h. senkrecht bis streifend zur Glaskeramikoberfläche betrachtet. Abhängig von der Helligkeit der Glaskeramikprobe wird die Leuchtdichte der weißen LED in diesem Abstand senkrecht zur Glaskeramikplatte auf 60 cd/m² geregelt, bzw. bei sehr dunklen Glaskeramikproben Y < 0,5 % mit maximaler Leistung betrieben. Um den Einfluss von Fremdlicht auszuschließen, wird die Bewertung in einer Dunkelkammer mit geringer Umgebungsbeleuchtung von ca. 4 lux vorgenommen. Diese Bedingungen bedeuten für ein Kochfeld eine sehr kritische Einbau- und Beleuchtungssituation.

Dabei bedeuten die visuellen Bewertungen in den Tabellen (1=keine Streuung wahrnehmbar, 2=geringe, aber tolerierbare Streuung, 3=sichtbare Streuung, erfordert zusätzlichen Aufwand für die Gestaltung des Kochfeldes, 4=deutliche störende Streuung, nicht tolerierbar). Bewertungen ab Stufe 4 sind nicht zulässig und solche ab Stufe 3 bevorzugt zu vermeiden. Bis auf Beispiel 6 mit Keatit-Mischkristall (KMK) als Hauptkristallphase sind die Beispiele ohne sichtbare Streuung.

Für einige Proben wurden Grauwertdifferenzmessungen zur Quantifizierung des Dead-Front-Effekts durchgeführt. Alle gemessenen Proben wiesen eine Grauwertdifferenz ΔG zwischen 0,1 und 3 %, also einen effektiven Dead-Front-Effekt, auf. Insbesondere die Proben mit einem Lichttransmissionsgrad von ca. 20% oder weniger wiesen Grauwertdifferenzen zwischen 0,1 und 0,3 % auf. Für diese Messungen wurde eine Anzeigeeinrichtung, deren Anzeigefläche einen CIELAB-Farbort in Remission von L* = 27,5, a* = -0,7 und b* = 0,4 aufweist, verwendet. Das verwendete Abdeckmittel wies bei direkter Messung, also nicht durch ein Glas- oder Glaskeramiksubstrat hindurch, einen CIELAB-Farbort in Remission gegen Schwarzfalle von L* = 28,8, a* = -0,6 und b* = -1,5 auf.

In den Tabellen 5, 6 und 7 sind Ausführungsbeispiele von transparenten, nicht eingefärbten, temperaturbeständigen, 4 mm dicken Substraten aus Glaskeramiken des Typs CERAN^{®} Cleartrans mit verschiedenen Beschichtungen mit entsprechenden optischen Eigenschaften aufgeführt, die für erfindungsgemäße Gegenstände geeignet sind. CERAN^{®} Cleartrans weist eine thermische Ausdehnung CTE im Bereich 20 °C bis 300°C zwischen -1 x 10⁻⁶/K und 1 x 10⁻⁶/K auf. Beispiel B1 ist ein Vergleichsbeispiel. Die angeführten Eigenschaften der Beschichtungen sind im Wesentlichen unabhängig von dem gewählten Substrat. Deshalb sind die genannten Beschichtungen für eine Kombination mit temperaturstabilen Gläsern ebenso geeignet. Ebenso können die Beschichtungen auf für die Erfindung geeignete eingefärbte Glaskeramiken und Gläser, beispielsweise die in Tabellen 2 und 4 genannten, aufgebracht werden.

Die Beschichtungen wurden mittels reaktivem Mittelfrequenzsputtern von metallischen Legierungstargets hergestellt. Dabei wurde Sauerstoff als Reaktivgas zugeführt.

Als Materialien wurden dabei CoFeMnCr für die Spinellschichten und MoSiOx für die Cermetschicht verwendet. Für Beispiel B3 wurde ein Target aus einer MoSi-Legierung mit einem Gewichtsanteil von 32 Gew.-% Mo und 68 Gew.-% Si verwendet.

Bei dem Vergleichsbeispiel B1 handelt es sich um eine dunkle SpinellBeschichtung ohne Ausgleichsschicht, die nicht die Anforderungen bezüglich des Farborts in Remission entspricht. Durch den hohen negativen b*-Wert wirkt diese Beschichtung blau.

Die Beispiele B2 bis B9 sind farbneutral schwarze Beschichtungen mit Lichttransmissionsgraden (Y) im Bereich 29,5 % bis 36,7 %. Die Farborte liegen im Bereich 26 < L* < 31, -3 < a* < 3, -3 < b* < 3. Für diese Beispiele weist Licht der Normlichtart D65 nach Durchtritt durch die Beschichtung und das Substrat einen Farbort im Weißbereich W2 auf. Die Farbtemperaturen liegen im warmweißen Teil von W2 bei ca. 3.500 K bis 4.500 K.

Diese Beispiele weisen weiterhin einen Haze von weniger als 0,5 % auf und sind somit für eine Verwendung in Kombination mit Anzeigeeinrichtungen wie TFT-Displays sehr gut geeignet. Da sie ebenfalls einen hohen Flächenwiderstand aufweisen, sind sie sowohl für die Verwendung mit Induktionsspulen als auch mit kapazitiven oder induktiven Sensoren geeignet.

Die Transmission der Beispiele im infraroten Spektralbereich ist ebenfalls für die Verwendung verschiedener Infrarotsensoren und Strahlungsheizelementen geeignet.

Die Beispiele weisen einen flachen Transmissionsverlauf im sichtbaren Spektralbereich auf. Das Verhältnis der spektralen Transmission bei 630 nm zu dem bei 470 nm beträgt ungefähr bei 1,8 bis 2,0.

Bei den Beispielen B3 bis B9 handelt es sich um MoSiOx-Cermet-Beschichtungen mit einer Zusammensetzung im Bereich von 20:80 Mo:Si bis 35:65 Mo:Si. Das Verhältnis Mo:Si bezieht sich dabei auf den jeweiligen Anteil in Gewichtsprozent in der Beschichtung. Der Sauerstoffanteil oder andere Bestandteile in der Beschichtung wird dabei nicht berücksichtigt.

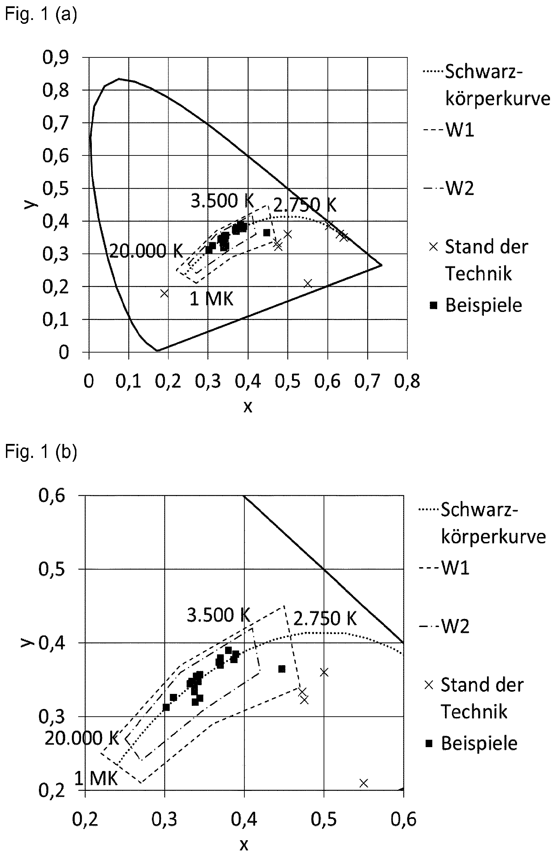

Die Figuren 1(a) und (b) zeigen Chromatizitätsdiagramme des Farbraums CIExyY mit 2° Normalbeobachter (CIExyY-2°). Die Fig. 1 (b) zeigt einen vergrößerten Ausschnitt des in der Fig. 1(a) dargestellten Gesamtbereichs des Chromatizitätsdiagramms.

In den Abbildungen sind die Schwarzkörperkurve als gepunktete Linie, die beiden Weißbereiche W1 und W2 als gestrichelte Linien, die Farbkoordinaten der in den Tabellen aufgeführten, für die Verwendung in einem erfindungsgemäßen Gegenstand geeigneten Beispiele als schwarze Quadrate und Beispiele aus dem Stand der Technik als schwarze Kreuze abgebildet.

Jeder Punkt auf der Schwarzkörperkurve entspricht dem Farbort des von einem Schwarzkörperstrahler emittierten Lichts bei einer definierten Temperatur, der sogenannten Farbtemperatur. Dieser Kurve kommt für die Wahrnehmung des Menschen eine besondere Rolle zu, da die Sonne ebenfalls einem Schwarzkörperstrahler entspricht und somit die Farbe von Sonnenlicht auf der Schwarzkörperkurve liegt. Je nach Stand der Sonne verschiebt sich der Farbort zwischen kühleren und wärmeren Farborten, dabei entspricht eine Farbtemperatur von 20.000 K einem klaren Himmel und eine Temperatur von 3.500 K einer Abendsonne kurz vor Beginn der Dämmerung. Farborte auf oder in der Nähe der Schwarzkörperkurve werden deshalb als Weiß und besonders natürlich wahrgenommen.

Der dargestellte Stand der Technik besteht teilweise aus den in der WO 2012076414 A1 genannten Glaskeramiktypen und teilweise aus kommerziell erhältlichen Glaskeramiken der Firmen SCHOTT AG und Eurokera. Diese Beispiele aus dem Stand der Technik liegen alle außerhalb des Weißbereichs W1. Wie aus der WO 2012076414 A1 bekannt ist, kann der Weißbereich W1 mit diesen Glaskeramiken nur durch die Verwendung zusätzlicher, aufwändiger Kompensationsfilter erschlossen werden. Die erfindungsgemäßen Beispiele decken diesen Bereich jedoch auch ohne einen solchen Filter ab. Alle dargestellten Farborte beziehen sich auf eine Materialstärke von 4 mm.

Die aus den Tabellen 2, 4. 5, 6 und 7 übernommenen Beispiele liegen alle innerhalb des Weißbereichs W1. Von diesen liegen alle Beispiele, die weniger als 0,01 Gew.-% V₂O₅ in der Glaskeramik enthalten, also auch die Beschichtungsbeispiele aus Tabelle 5, die auf V₂O₅-freien Glaskeramiken aufgebracht wurden, auch innerhalb des Weißbereichs W2. Zusätzlich liegen die V₂O₅-freien Glaskeramiken aus den Tabellen 2 und 4 auch innerhalb des nicht dargestellten Weißbereichs W3.

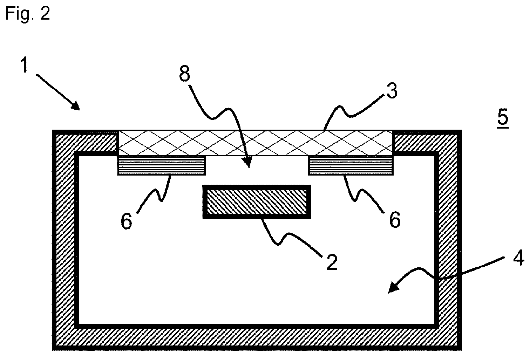

Fig. 2 enthält eine schematische Darstellung eines erfindungsgemäßen Gegenstands im Querschnitt. Der dargestellte Einrichtungs- oder Ausstattungsgegenstand (1) für eine Küche oder ein Labor umfasst eine Anzeigeeinrichtung (2) und ein Trennelement (3), das Abschnittsweise einen Innenbereich (4) des Gegenstandes (1) von einem Außenbereich (5) abtrennt. Die Anzeigeeinrichtung (2) im Innenbereich (4) des Gegenstandes (1) ist so angeordnet, dass das von der Anzeigeeinrichtung (2) ausgesandte Licht durch einen Abschnitt des Trennelements (3) hindurchtritt und von einem Benutzer im Außenbereich (5) des Gegenstandes (1) wahrnehmbar ist. In der dargestellten Ausführungsform besteht das Trennelement (3) aus einem Glas- oder Glaskeramiksubstrat. Auf der Seite des Trennelementes (3), die dem Innenbereich (4) des Gegenstandes (1) zugewandt ist, ist ein Abdeckmittel (6) angeordnet, das einen Lichttransmissionsgrad von höchstens 7 % aufweist und im Bereich der Anzeigeeinrichtung (2) eine Aussparung (8) aufweist. Im Bereich dieser Aussparung (8) weist das Trennelement (3) einen Lichttransmissionsgrad von wenigstens 5 % und von höchstens 70 % auf. Das Abdeckmittel (6) weist einen Farbort im CIELAB-Farbraum mit den Koordinaten L* von 20 bis 40, a* von -6 bis 6 und b* von -6 bis 6 auf. Der Farbort von Licht der Normlichtart D65 liegt nach Durchtritt durch das Glas- oder Glaskeramiksubstrat des Trennelementes (3) im Bereich der Aussparung (8) des Abdeckmittels (6) innerhalb des Weißbereichs W1.

Erfindungsgemäße Einrichtungs- oder Ausstattungsgegenstände für Küchen oder Labore können in ihrem Innenbereich neben der Anzeigeeinrichtung noch eine Vielzahl weitere Bauteile und Komponenten enthalten.

Die Gegenstände können beispielsweise ein oder mehrere Heizelemente zum Aufheizen eines Gegenstandes, beispielsweise eines Topfes, im Außenbereich oder auch im Innenbereich des Gegenstandes aufweisen. Dies können insbesondere Strahlungsheizelemente, Induktionsheizelemente, Gasheizelemente oder Mikrowellengeneratoren sein.

Die Gegenstände können weitere Anzeigeeinrichtungen und andere Leuchtelemente wie Punkt-, Linien- oder Flächenlichtquellen aufweisen. Dazu zählen beispielsweise LEDs, Lichtfasern und OLEDs. Diese Lichtquellen können mit einer bestimmten Farbe, insbesondere weiß, rot, grün und/oder blau leuchten oder auch mit veränderlichen Farben. Zwischen diesen Anzeigeeinrichtungen oder Leuchtelementen und dem Trennelement können zusätzliche Farbfilter vorgesehen sein, beispielsweise um eine weiße LED zur Erzeugung einer farbigen Lichterscheinung mit einem definierten Farbort und hoher Farbsättigung nutzen zu können.

Als weitere Anzeigeeinrichtungen können sowohl Segmentanzeigen als auch graphische Anzeigen vorgesehen sein. Die Segmentanzeigen können insbesondere als farbige 7-Segmentanzeigen ausgeführt sein. Die graphischen Anzeigen sind bevorzugt TFT-Anzeigen, beispielsweise LCD- oder OLED-Anzeigen.

Leuchtelemente können insbesondere auch im Heißbereich in der Nähe von Heizelementen angeordnet sein. Hierbei ist insbesondere für die Erzeugung von weißen Leuchterscheinungen im Außenbereich des Gegenstandes von Vorteil, dass keine temperaturempfindlichen Schwarzkörperkompensationsfilter benötigt werden.

In einer bevorzugten Ausführungsform können zusätzlich zu einem Leuchtelement ein oder mehrere Streu- oder Diffusorschichten vorgesehen sein. Vorzugsweise werden solche Schichten in Kombination mit mindestens einer Abdeckschicht zwischen Substrat und Leuchtelement sowie mit mindestens einer Aussparung in der Abdeckschicht verwendet. Streu- und Diffusorschichten können insbesondere zur Erzeugung einer homogenen Leuchterscheinung von Linien- und Flächenleuchtelementen verwendet werden.

Streu- und Diffusorschichten können optional auch eingefärbt ausgeführt sein. Eingefärbte Streu- und Diffusorschichten können gleichzeitig als Diffusor und als optischer Filter fungieren.

Solche Streu- oder Diffusorschichten können beispielsweise 1 bis 15 µm dick sein. Sie können nicht-eingefärbte Streupartikel, beispielsweise aus TiO₂, SiO₂, Al₂O₃, ZrO₂ oder anderen Metalloxiden enthalten. Die mittlere Größe solcher Partikel kann kleiner als 1 µm sein. Vorzugsweise weisen die Streu- oder Diffusorschichten eine hohe Homogenität der erzeugten Leuchtdichte, eine niedrige Körnigkeit und eine hohe Helligkeit auf. Hierdurch kommt es zu einer für den Benutzer sehr angenehmen Wahrnehmung eines sehr homogen ausgeleuchteten Bereichs.

Die Gegenstände können Kühlaggregate, beispielsweise Peltierelemente, in thermischem Kontakt mit dem Trennelement aufweisen, um an der dem Außenbereich zugewandten Seite des Trennelements eine Kühlfläche, beispielsweise zur Kühlung von Lebensmitteln oder Chemikalien, zu erzeugen.

Der Gegenstand kann diverse Sensoren aufweisen, beispielsweise kapazitive Berührungssensoren zur Steuerung oder Infrarotsensoren zur Gestensteuerung oder zur Messung der Temperatur von heißen Gegenständen im Außenbereich, beispielsweise heißen Töpfen. Weiterhin kann der Gegenstand Mikrophone und Kameras, beispielsweise zur Sprachsteuerung oder Benutzererkennung und - authentifizierung aufweisen. Dies kann beispielsweise in Laboren besonders vorteilhaft sein, falls der Gegenstand nur von entsprechend geschulten Personen verwendet werden darf. Solche Sensoren können auf die Innenseite des Trennelements aufgedruckt, angepresst, gebondet, aufgeklebt oder in sonstiger Weise angeordnet sein. Dies gilt insbesondere für Berührungssensoren.

Der Gegenstand kann verschiedene Schnittstellen zur Kommunikation aufweisen, beispielsweise WLAN-, Bluetooth-, oder NFC-Module oder Infrarotschnittstellen. Über solche Schnittstellen kann der Gegenstand beispielsweise entweder mit dem Internet oder mit anderen Gegenständen in seiner Nähe, beispielsweise Töpfen mit entsprechender Schnittstelle oder anderen elektronischen Geräten, verbunden sein. Insbesondere kann es zur Steuerung und Kommunikation mit einem mobilen elektronischen Gerät, wie einem Mobiltelefon oder einem Tablet, verbunden sein.

Der Gegenstand kann eine Vorrichtung zur kabellosen Energieübertragung von Gegenständen im Außenbereich, insbesondere mittels Induktionsspulen und nach dem Qi-Standard, enthalten.

Das Trennelement kann auf der dem Außenbereich zugewandten Seite Beschichtungen aufweisen, beispielsweise Kratzschutz-Schichten, Antireflex-Schichten, Anti-Glare-Schichten, Dekor-Schichten, einfach zu reinigende Schichten oder Infrarot-reflektierende Schichten, solange diese die wesentlichen optischen Eigenschaften des Trennelements nicht verändern.

Das Trennelement kann Aussparungen aufweisen, beispielsweise Ausschnitte für Spülbecken oder Down-Draft-Dunstabzüge oder Durchführungen für Rohrleitungen.

Ebenfalls optional kann das Trennelement eine Kantenbearbeitung aufweisen, beispielsweise eine Facette oder einen C-Schliff.

Alle diese Bestandteile können einzeln oder in Kombination vorliegen.

**Tabelle 1: Zusammensetzung und Eigenschaften des kristallisierbaren Basisglases 1 mit Grundzusammensetzung.**

| **Glas Nr.** | | **1** |
|---|---|---|
| **Zusammensetzung** | Gew.% | |
| Li₂O | | 3,80 |
| Na₂O | | 0,60 |
| K₂O | | 0,25 |
| MgO | | 0,29 |
| CaO | | 0,40 |
| SrO | | 0,02 |
| BaO | | 2,23 |
| ZnO | | 1,53 |
| Al₂O₃ | | 20,9 |
| SiO₂ | | 65,0 |
| TiO₂ | | 3,10 |
| ZrO₂ | | 1,38 |
| P₂O₅ | | 0,09 |
| SnO₂ | | 0,25 |
| As₂O₃ | | 0 |
| MnO₂ | | 0,025 |
| | | |
| H₂O - Gehalt (β-OH) | mm⁻¹ | 0,39 |
| | | |

| **Eigenschaften glasig** | | |
|---|---|---|
| Transformationstemperatur Tg | °C | 662 |
| 10² - Temperatur | °C | 1742 |
| Verarbeitungstemperatur V_{A} | °C | 1306 |
| OEG-Temperatur | °C | 1260 |

**Tabelle 2: Dotierungen und Eigenschaften der erfindungsgemäßen Glaskeramiken und Vergleichsbeispiele 1 und 2**

| **Beispiel Nr.** | | **1** | **2** | **3** | **4** | **5** | **6** | **7** |
|---|---|---|---|---|---|---|---|---|
| **Glas Nr.** | | **1** | **1** | **2** | **3** | **4** | **4** | **5** |
| **Basisglas** | | **1** | **1** | **1** | **1** | **1** | **1** | **1** |

| **Dotierungen (Gew.-%)** | | | | | | | | |
|---|---|---|---|---|---|---|---|---|
| Fe₂O₃ | | 0,090 | 0,090 | 0,120 | 0,088 | 0,086 | 0,086 | 0,090 |
| V₂O₅ | | 0,023 | 0,023 | 0,010 | | | | |
| MoO₃ | | | | 0,057 | 0,078 | 0,013 | 0,013 | 0,057 |
| Cr₂O₃ | | | | | | | | |
| CeO₂ | | | | | | | | |
| WO₃ | | | | | | | | |
| Zusatz Gemenge | | | | | | | | |
| **Keramisierung** | # | 1 | 2 | 1 | 1 | 1 | 3 | 1 |

| **Eigenschaften keramisiert** | | | | | | | | |
|---|---|---|---|---|---|---|---|---|
| **Transmission 4 mm Dicke Normlicht D65,2°** | | | | | | | | |
| 470 nm | % | 1,2 | 0,7 | 2,9 | 13,3 | 41,6 | 33,5 | 16,7 |
| 630 nm | % | 9,9 | 6,6 | 12,6 | 17,2 | 58,1 | 43,7 | 21,7 |
| 950 nm | % | 73,0 | 71,9 | 66,5 | 60,8 | 75,5 | 73,0 | 62,1 |
| 1600 nm | % | 76,4 | 76,3 | 70,9 | 74,8 | 77,1 | 76,3 | 75,1 |
| 3700 nm | % | 52,0 | 51,1 | 50,0 | 52,2 | 52,4 | 56,1 | 51,0 |

| **Farbkoordinaten (CIE) in Transmission** | | | | | | | | |
|---|---|---|---|---|---|---|---|---|
| x | | 0,502 | 0,517 | 0,447 | 0,337 | 0,344 | 0,340 | 0,337 |
| y | | 0,367 | 0,358 | 0,365 | 0,334 | 0,357 | 0,355 | 0,339 |
| Helligkeit Y | % | 3,6 | 2,2 | 5,8 | 13,6 | 50,1 | 38,2 | 17,6 |
| Farbabstand d | | 0,193 | 0,207 | 0,139 | 0,025 | 0,042 | 0,038 | 0,026 |

| **Farbkoordinaten (CIELAB) in Remission** | | | | | | | | |
|---|---|---|---|---|---|---|---|---|
| L* | | 25,19 | 24,99 | 25,74 | 26,52 | 29,79 | | 25,66 |
| a* | | 0,28 | 0,04 | 0,39 | 0,16 | 0,16 | | 0,15 |
| b* | | -0,66 | -0,78 | 0,80 | -0,80 | -2,12 | | -0,9 |
| c* | | 0,72 | 0,78 | 0,89 | 0,82 | 2,13 | | 0,91 |
| ΔE | | 4,26 | 0,68 | 5,58 | | 19,55 | | |
| \|G₁-G₂\| | % | | | | 0,2 | 1,6 | | 0,1 |
| **Flachheit Transmission** (Wellenlänge Max./Min.) | Nm | 8,4 630/470 | 10,0 630/470 | 4,4 630/470 | 1,4 630/529 | 1,4 630/470 | 1,3 630/470 | 1,3 630/524 |

| **Streuung 4 mm Dicke Normlicht D65, 2°** | | | | | | | | |
|---|---|---|---|---|---|---|---|---|
| Visuelle Bewertung | | 1 | 1 | 1 | 1 | 1 | 3 | 1 |
| Haze | % | 0,8 | 0,5 | 1,5 | 1,5 | 1,7 | 10,7 | 1,3 |

| **Thermische Ausdehnung** | | | | | | | | |
|---|---|---|---|---|---|---|---|---|
| **CTE** α**_{20/300}** | 10⁻⁶/K | -0,26 | -0,29 | | | | | -0,24 |
| **CTE** α**_{20/700}** | 10⁻⁶/K | 0,13 | 0,17 | | | | 0,70 | 0,16 |

| **Röntgenbeugung** | | | | | | | | |
|---|---|---|---|---|---|---|---|---|
| Hauptkristallphase | | HQMK | HQMK | HQMK | HQMK | HQMK | KMK | HQMK |

**Tabelle 2 (Fortsetzung): Dotierungen und Eigenschaften der erfindungsgemäßer Glaskeramiken.**

| **Beispiel Nr.** | | **8** | **9** | **10** | **11** |
|---|---|---|---|---|---|
| **Glas Nr.** | | **6** | **6** | **7** | **8** |
| **Basisglas** | | **1** | **1** | **1** | **1** |

| **Dotierungen (Gew.-%)** | | | | | |
|---|---|---|---|---|---|
| Fe₂O₃ | | 0,062 | 0,062 | 0,061 | 0,062 |
| V₂O₅ | | | | | |
| MoO₃ | | 0,015 | 0,015 | 0,019 | 0,014 |
| CoO | | | | | |
| Cr₂O₃ | | | | | |
| Nd₂O₃ | | | | | 0,042 |
| NiO | | | | | |
| Zusatz Gemenge | | | | 0,1 Zucker ohne Nitrat | |
| **Keramisierung** | # | 1 | 2 | 1 | 1 |

| **Eigenschaften keramisiert** | | | | | |
|---|---|---|---|---|---|
| **Transmission 4 mm Dicke Normlicht D65,2°** | | | | | |
| 470 nm | % | 42,6 | 43,4 | 22,2 | 42,8 |
| 630 nm | % | 53,4 | 52,7 | 21,2 | 54,2 |
| 950 nm | % | 76,4 | 75,9 | 57,4 | 76,5 |
| 1600 nm | % | 80,8 | 80,4 | 78,1 | 80,8 |
| 3700 nm | % | 53,6 | 53,4 | 50,5 | 53,2 |

| **Farbkoordinaten (CIE) in Transmission** | | | | | |
|---|---|---|---|---|---|
| x | | 0,335 | 0,332 | 0,311 | 0,334 |
| y | | 0,348 | 0,345 | 0,326 | 0,348 |
| Helligkeit Y | % | 47,6 | 47,4 | 20,4 | 47,8 |
| Farbabstand d | | 0,029 | 0,025 | 0,003 | 0,029 |

| **Farbkoordinaten (CIELAB) in Remission** | | | | | |
|---|---|---|---|---|---|
| L* | | 28,13 | 28,42 | 25,84 | |
| a* | | 0,32 | 0,30 | -0,05 | |
| b* | | 0,15 | 0,31 | -1,27 | |
| c* | | 0,35 | 0,43 | 1,27 | |
| ΔE | | 22,43 | 23,22 | 5,33 | |
| \|G₁-G₂\| | | 3,0 | | 0,3 | |
| **Flachheit Transmission** (Wellenlänge bei Max./Min.) | nm | 1,3 630/470 | 1,2 630/470 | 1,1 470/572 | 1,3 630/470 |

| **Streuung 4 mm Dicke Normlicht D65,2°** | | | | | |
|---|---|---|---|---|---|
| Visuelle Bewertung | | 1 | 1 | 1 | 1 |
| Haze | % | 1,9 | 1,6 | 2,7 | |

| **Thermische Ausdehnung** | | | | | |
|---|---|---|---|---|---|
| CTE α_{20/300} | 10⁻⁶/K | -0,24 | -0,28 | -0,24 | -0,21 |
| CTE α_{20/700} | 10⁻⁶/K | 0,16 | 0,09 | 0,14 | 0,16 |

| **Röntgenbeugung** | | | | | |
|---|---|---|---|---|---|
| Hauptkristallphase | | HQMK | HQMK | HQMK | HQMK |

**Tabelle 3: Zusammensetzungen und Eigenschaften kristallisierbarer Gläser und Vergleichsglas Nr. 9**

| **Glas Nr.** | | **9** | **10** | **11** | **12** |
|---|---|---|---|---|---|
| **Zusammensetzung** | Gew.% | | | | |
| Li₂O | | 3,83 | 3,83 | 3,79 | 3,31 |
| Na₂O | | 0,57 | 0,61 | 0,60 | 0,37 |
| K₂O | | 0,21 | 0,27 | 0,26 | 0,36 |
| MgO | | 0,19 | 0,30 | 0,29 | 0,56 |
| CaO | | 0,36 | 0,43 | 0,43 | 0,58 |
| SrO | | | 0,02 | 0,02 | |
| BaO | | 2,41 | 2,21 | 2,23 | 1,62 |
| ZnO | | 1,41 | 1,49 | 1,47 | 1,92 |
| Al₂O₃ | | 20,2 | 20,9 | 21,0 | 21,4 |
| SiO₂ | | 65,8 | 64,8 | 65,0 | 64,8 |
| TiO₂ | | 3,02 | 3,14 | 3,05 | 3,20 |
| ZrO₂ | | 1,39 | 1,40 | 1,40 | 1,35 |
| P₂O₅ | | 0,11 | 0,10 | 0,10 | 0,04 |
| SnO₂ | | 0,30 | | | 0,24 |
| As₂O₃ | | | 0,28 | 0,15 | |
| Fe₂O₃ | | 0,090 | 0,062 | 0,061 | 0,0990 |
| V₂O₅ | | 0,016 | | | |
| MoO₃ | | | 0,150 | 0,150 | 0,1600 |
| MnO₂ | | 0,021 | 0,025 | 0,025 | |
| CoO | | 0,027 | | | |
| Zusatz Gemenge | Gew.% | | | 0,2 Zucker ohne Nitrat | |

| **Eigenschaften glasig** | | | | | |
|---|---|---|---|---|---|
| Transformationstemperatur Tg | °C | | | | 675 |
| 10² - Temperatur | °C | | | | 1733 |
| Verarbeitungstemperatur V_{A} | °C | | | | 1300 |
| OEG-Temperatur | °C | | | | 1275 |

**Fortsetzung Tabelle 3: Zusammensetzungen und Eigenschaften kristallisierbarer Gläser**

| **Glas Nr.** | | **13** | **14** | **15** |
|---|---|---|---|---|
| **Zusammensetzung** | Gew.% | | | |
| Li₂O | | 4,13 | 3,22 | 3,73 |
| Na₂O | | 0,64 | 0,78 | 0,78 |
| K₂O | | 0,29 | 0,20 | 0,58 |
| MgO | | 0,24 | 0,81 | 0,20 |
| CaO | | 0,52 | 0,21 | 0,21 |
| SrO | | 0,02 | | |
| BaO | | 2,05 | 2,42 | 2,41 |
| ZnO | | | 1,16 | 0,93 |
| Al₂O₃ | | 21,7 | 19,8 | 20,0 |
| SiO₂ | | 65,8 | 66,9 | 66,4 |
| TiO₂ | | 3,58 | 2,68 | 2,83 |
| ZrO₂ | | 0,64 | 1,44 | 1,40 |
| P₂O₅ | | 0,03 | | |
| SnO₂ | | 0,25 | 0,20 | 0,39 |
| As₂O₃ | | | | |
| Fe₂O₃ | | 0,065 | 0,110 | 0,033 |
| V₂O₅ | | | | |
| MoO₃ | | 0,026 | 0,043 | 0,045 |
| MnO₂ | | | | |
| CoO | | | | |
| Zusatz Gemenge Zucker ohne Nitrat | | | | 0,2% |

| **Eigenschaften glasig** | | | | |
|---|---|---|---|---|
| Transformationstemperatur Tg | °C | 685 | 680 | 674 |
| 10² - Temperatur | °C | 1774 | 1770 | 1770 |
| Verarbeitungstemperatur V_{A} | °C | 1327 | 1331 | 1331 |
| OEG-Temperatur | °C | 1255 | 1260 | |

**Tabelle 4: Eigenschaften erfindungsgemäßer Glaskeramiken und Vergleichsglaskeramik Beispiel 12**

| **Beispiel Nr.** | | **12** | **13** | **14** | **15** | **16** |
|---|---|---|---|---|---|---|
| **Glas Nr.** | | **9** | **10** | **11** | **12** | **12** |
| **Keramisierung** | **#** | 2 | 1 | 1 | 1 | 2 |

| **Eigenschaften keramisiert** | | | | | | |
|---|---|---|---|---|---|---|
| **Transmission 4 mm Dicke** | | | | | | |
| 470 nm | % | 1,9 | 43,4 | 39,4 | 5,8 | 5,2 |
| 630 nm | % | 10,8 | 57,1 | 52,3 | 8,3 | 7,0 |
| 950 nm | % | 72,0 | 82,2 | 83,1 | 53,4 | 50,9 |
| 1600 nm | % | 67,5 | 82,9 | 82,8 | 69,1 | 68,1 |
| 3700 nm | % | 49,4 | 53,6 | 52,0 | 46,3 | 46,4 |

| **Farbkoordinaten (CIE) in Transmission** | | | | | | |
|---|---|---|---|---|---|---|
| x | | 0,476 | 0,342 | 0,342 | 0,344 | 0,338 |
| y | | 0,322 | 0,355 | 0,351 | 0,325 | 0,320 |
| Y | % | 3,5 | 48,7 | 43,7 | 5,9 | 5,0 |
| Farbabstand d | | 0,163 | 0,024 | 0,037 | 0,032 | 0,027 |

| **Farbkoordinaten (CIELAB) in Remission** | | | | | | |
|---|---|---|---|---|---|---|
| L* | | | 29,38 | | | |
| a* | | | 0,46 | | | |
| b* | | | 0,78 | | | |
| c* | | | 0,91 | | | |
| ΔE | | | 31,01 | | | |
| **Flachheit Transmission** (Wellenlänge bei Max./Min.) | nm | 8,0 630/504 | 1,3 630/470 | 1,3 630/470 | 1,6 630/527 | 1,6 630/536 |

| **Streuung 4 mm Dicke Normlicht D65,2** | | | | | | |
|---|---|---|---|---|---|---|
| Visuelle Bewertung | | 1 | 1 | 1 | 1 | 1 |
| Haze | % | | 2,0 | 1,4 | 0,6 | 3,4 |

| **Thermische Ausdehnung** [10⁻⁶/K] | | | | | | |
|---|---|---|---|---|---|---|
| CTE α_{20/300} | | -0,40 | -0,24 | -0,27 | 0,05 | 0,00 |
| CTE α_{20/700} | | -0,03 | 0,16 | 0,12 | 0,34 | 0,27 |

| **Röntgenbeugung** | | | | | | |
|---|---|---|---|---|---|---|
| Hauptkristallphase | | HQMK | HQMK | HQMK | HQMK | HQMK |

**Fortsetzung Tabelle 4: Eigenschaften erfindungsgemäßer Glaskeramiken**

| **Beispiel Nr.** | | **17** | **18** | **19** |
|---|---|---|---|---|
| **Glas Nr.** | | **13** | **14** | **15** |
| **Keramisierung** | # | 1 | 2 | 2 |
| **Eigenschaften keramisiert** | | | | |
| **Transmission 4 mm Dicke Normlicht D65,2°** | | | | |
| 470 nm | % | 12,1 | 33,2 | 12,5 |
| 630 nm | % | 27,4 | 46,1 | 10,8 |
| 950 nm | % | 54,0 | 71,6 | 51,8 |
| 1600 nm | % | 72,1 | 72,3 | 82,7 |
| 3700 nm | % | 49,9 | 46,1 | 47,0 |

| **Farbkoordinaten (CIE) in Transmission** | | | | |
|---|---|---|---|---|
| x | | 0,389 | 0,342 | 0,302 |
| y | | 0,385 | 0,348 | 0,313 |
| Y | % | 19,6 | 38,5 | 10,3 |
| Farbabstand d | | 0,095 | 0,035 | 0,019 |

| **Flachheit Transmission** (Wellenlänge bei Max./Min.) | nm | 2,3 630/470 | 1,4 630/470 | 1,3 470/575 |
|---|---|---|---|---|
| **Streuung 4 mm Dicke Normlicht D65,2°** | | | | |
| Visuelle Bewertung | | 2 | 1 | 1 |
| Haze | % | | 1,1 | 1,1 |

| **Thermische Ausdehnung** | | | | |
|---|---|---|---|---|
| CTE α_{20/300} | 10⁻⁶/K | -0,37 | 0,32 | -0,14 |
| CTE α_{20/700} | 10⁻⁶/K | 0,01 | 0,59 | 0,26 |

| **Röntgenbeugung** | | | | |
|---|---|---|---|---|
| Hauptkristallphase | | HQMK | HQMK | HQMK |

**Tabelle 5: Beispiele für einen erfindungsgemäßen Gegenstand geeigneter Beschichtungen und Vergleichsbeispiel auf transparenten, nicht eingefärbten Glaskeramiken des Typs CERAN^{®} Cleartrans.**

| Nr. | | B1 | B2 | B3 |
|---|---|---|---|---|
| Typ | | Spinell | Spinell + Ausgleichsschicht | Cermet |
| Material | | CoFeMnCr | CoFeMnCr + SiOxNy | MoSiOx |
| Mo | | - | - | 32 |
| Si | | - | - | 68 |
| Farbe | | Blau | Schwarz | Schwarz |

| Farbkoordination (CIExyY) in Transmission | | | | |
|---|---|---|---|---|
| x | | 0,39 | 0,387 | 0,368 |
| y | | 0,39 | 0,378 | 0,374 |
| Y | % | 37,6 | 33,2 | 32,8 |

| Farbkoordinaten (CIELAB) in Remission | | | | |
|---|---|---|---|---|
| L* | | 29,79 | 30,48 | 27,1 |
| a* | | 1,86 | -0,75 | 0,4 |
| b* | | -17,95 | 0,57 | 1,2 |
| c | | 18,05 | 0,94 | 1,26 |

| Spektraler Transmissionsgrad | | | | |
|---|---|---|---|---|
| 950 nm | % | 59,4 | 67,1 | 65,3 |
| 1600 nm | % | 63,3 | 63,2 | 83,4 |
| 3750 nm | % | 43,6 | 43,5 | 47,3 |
| Haze | % | 0,11 | 0,28 | 0,22 |

| Sonstiges | | | | |
|---|---|---|---|---|
| R | MΩ/□ | >20 | >20 | >20 |
| Dicke | nm | | 200 + 45 | |

**Tabelle 6: Weitere Beispiele geeigneter Beschichtungen auf transparenten, nicht eingefärbten Glaskeramiken.**

| Nr. | | B4 | B5 | B6 |
|---|---|---|---|---|
| Typ | | Cermet | Cermet | Cermet |
| Material | | MoSiOx | MoSiOx | MoSiOx |
| Mo | | 32 | 22 | 32 |
| Si | | 68 | 78 | 68 |
| Farbe | | Schwarz | Schwarz | Schwarz |

| Farbkoordinaten (CIELAB) in Remission | | | | |
|---|---|---|---|---|
| L* | | 27,1 | 27,2 | 26,9 |
| a* | | 0,4 | -0,8 | 0,6 |
| b* | | 1,2 | 1,4 | 1 |

| Farbkoordination (CIExyY) in Transmission | | | | |
|---|---|---|---|---|
| x | | 0,368 | 0,37 | 0,37 |
| y | | 0,374 | 0,37 | 0,37 |
| Y | % | 32,8 | 29,5 | 32,0 |

| Transmission | | | | |
|---|---|---|---|---|
| 470 nm | % | | 20,2 | 21,8 |
| 630 nm | % | | 38,4 | 41,3 |
| 950 nm | % | 65,3 | 59,8 | 65,1 |
| 1600 nm | % | 83,4 | 80,2 | 82,2 |
| 3750 nm | % | 47,3 | 47 | 46,9 |
| Haze | % | 0,22 | 0,2 | 0,2 |

| Sonstiges | | | | |
|---|---|---|---|---|
| R | MΩ/□ | >20 | >20 | >20 |

**Tabelle 7: Weitere Beispiele geeigneter Beschichtungen auf transparenten, nicht eingefärbten Glaskeramiken**

| Nr. | | B7 | B8 | B9 |
|---|---|---|---|---|
| Typ | | Cermet | Cermet | Cermet |
| Material | | MoSiOx | MoSiOx | MoSiOx |
| Mo | | 32 | 32 | 32 |
| Si | | 68 | 68 | 68 |
| Farbe | | Schwarz | Schwarz | Schwarz |

| Farbkoordinaten (CIELAB) in Remission | | | | |
|---|---|---|---|---|
| L* | | 26,4 | 27,1 | 27,8 |
| a* | | 2,0 | 1,0 | -2,8 |
| b* | | -1,8 | -2,4 | 1,2 |

| Farbkoordination (CIExyY) in Transmission | | | | |
|---|---|---|---|---|
| x | | 0,38 | 0,37 | 0,37 |
| y | | 0,39 | 0,38 | 0,38 |
| Y | % | 35,5 | 36,7 | 34,4 |

| Transmission | | | | |
|---|---|---|---|---|
| 470 nm | % | 22,7 | 23,7 | 24,1 |
| 630 nm | % | 45,8 | 45,8 | 44,2 |
| 950 nm | % | 54,9 | 65,1 | 66,1 |
| 1600 nm | % | 79,9 | 81,3 | 80,4 |
| 3750 nm | % | 47,8 | 47,8 | 47,5 |
| Haze | % | 0,3 | 0,3 | 0,3 |

| Sonstiges | | | | |
|---|---|---|---|---|
| R | MΩ/□ | >20 | >20 | >20 |

## Patentansprüche

1. Einrichtungs- oder Ausstattungsgegenstand (1) für eine Küche oder ein Labor umfassend eine Anzeigeeinrichtung (2) und ein Trennelement (3),
wobei das Trennelement (3) zumindest Abschnittsweise einen Innenbereich (4) des Gegenstandes (1) von einem Außenbereich (5) abtrennt,
wobei die Anzeigeeinrichtung (2) im Innenbereich (4) des Gegenstandes (1) so angeordnet ist, dass das von der Anzeigeeinrichtung (2) ausgesandte Licht durch einen Abschnitt des Trennelements (3) hindurchtritt und von einem Benutzer im Außenbereich (5) des Gegenstandes (1) wahrnehmbar ist,
wobei das Trennelement (3) ein Glas- oder Glaskeramiksubstrat umfasst, wobei das Glaskeramiksubstrat einen thermischen Ausdehnungskoeffizienten CTE zwischen 20 und 300 °C von -2,5 bis 2,5 x 10⁻⁶/K aufweist oder das Glassubstrat einen thermischen Ausdehnungskoeffizienten CTE zwischen 20 und 300 °C von 3,5 bis 6 x 10⁻⁶/K und eine Glasübergangstemperatur T_{g} von 500 bis 650 °C, insbesondere von 550 bis 650 °C aufweist,
wobei auf der Seite des Trennelementes (3), die dem Innenbereich (4) des Gegenstandes (1) zugewandt ist, ein Abdeckmittel (6) angeordnet ist,
wobei das Abdeckmittel (6) einen Lichttransmissionsgrad von höchstens 7 % aufweist und zumindest im Bereich der Anzeigeeinrichtung (2) zumindest eine Aussparung (8) aufweist, die mit dem Glas- oder Glaskeramiksubstrat überlappt,
wobei das Trennelement (3) im Bereich der Aussparung (8) einen Lichttransmissionsgrad von wenigstens 5 % und von höchstens 70 % aufweist,
wobei das Abdeckmittel (6) einen Farbort im CIELAB-Farbraum mit den Koordinaten L* von 20 bis 40, a* von -6 bis 6 und b* von -6 bis 6, gemessen in Remission mit Licht der Normlichtart D65 gegen eine Schwarzfalle in Durchsicht durch das Glas- oder Glaskeramiksubstrat aufweist,
wobei der Farbort von Licht der Normlichtart D65 nach Durchtritt durch das Glas- oder Glaskeramiksubstrat des Trennelementes (3) im Bereich der Aussparung (8) des Abdeckmittels (6) innerhalb eines Weißbereichs W1 liegt, der im Chromatizitätsdiagramm CIExyY-2° durch die folgenden Koordinaten bestimmt ist:

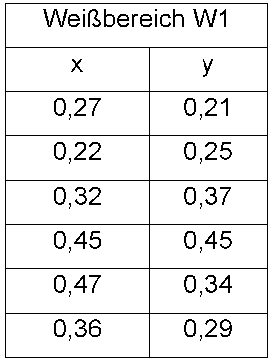

2. Einrichtungs- oder Ausstattungsgegenstand (1) nach Anspruch 1,
**dadurch gekennzeichnet, dass**
er keinen Schwarzkörperkompensationsfilter umfasst.

3. Einrichtungs- oder Ausstattungsgegenstand (1) nach Anspruch 1 oder 2, **dadurch gekennzeichnet, dass**
das Abdeckmittel (6) einen Lichttransmissionsgrad von höchstens 1 %, bevorzugt höchstens 0,1 % aufweist.

4. Einrichtungs- oder Ausstattungsgegenstand (1) nach einem der Ansprüche 1 bis 3, **dadurch gekennzeichnet, dass**
das Trennelement (3) im Bereich der Aussparung (8) bei einer Wellenlänge von 1600 nm eine Transmission von wenigstens 30 %, vorzugsweise wenigstens 45 %, besonders bevorzugt wenigstens 60 % aufweist und/oder bei wenigstens einer Wellenlänge im Bereich zwischen 850 nm und 1000 nm eine Transmission von wenigstens 3 %, bevorzugt wenigstens 10 %, besonders bevorzugt wenigstens 30 % und/oder bei wenigstens einer Wellenlänge im Bereich zwischen 3,25 µm und 4,25 µm eine Transmission von wenigstens 10 %, bevorzugt wenigstens 20 %, besonders bevorzugt wenigstens 30 % aufweist.

5. Einrichtungs- oder Ausstattungsgegenstand (1) nach einem der vorhergehenden Ansprüche,
**dadurch gekennzeichnet, dass**
das Trennelement (3) im Bereich der Aussparung (8) einen Lichttransmissionsgrad von wenigstens 9 %, bevorzugt wenigstens 15 %, besonders bevorzugt wenigstens 20 % und von höchstens 55 %, bevorzugt höchstens 45 %, besonders bevorzugt höchstens 40 % aufweist.

6. Einrichtungs- oder Ausstattungsgegenstand (1) nach einem der vorhergehenden Ansprüche,
**dadurch gekennzeichnet, dass**
das Abdeckmittel (6) in Durchsicht durch das Glas- oder Glaskeramiksubstrat einen Farbort im CIELAB-Farbraum mit L* kleiner oder gleich 35, bevorzugt kleiner oder gleich 30, besonders bevorzugt kleiner oder gleich 28 und größer oder gleich 22, bevorzugt größer oder gleich 25, mit a* von -4 bis 4, bevorzugt von-2 bis 2 und mit b* von -4 bis 4, bevorzugt von -2 bis 2, gemessen in Remission, aufweist.

7. Einrichtungs- oder Ausstattungsgegenstand (1) nach einem der vorhergehenden Ansprüche,
**dadurch gekennzeichnet, dass**
das Trennelement (3) ein Glas- oder Glaskeramiksubstrat und eine Beschichtung zur Einstellung des Lichttransmissionsgrades aufweist, wobei die Beschichtung aus einem der folgenden Materialsysteme besteht: Spinelle, Cermets, Carbide, Carbonitride.

8. Einrichtungs- oder Ausstattungsgegenstand (1) nach einem der vorhergehenden Ansprüche,
**dadurch gekennzeichnet, dass**
das Glaskeramiksubstrat des Trennelementes (3) 0,003-0,5 Gew.-% MoO₃ als färbende Komponente und/oder weniger als 0,2 Gew.-% Nd₂O₃, bevorzugt kein Nd₂O₃ und/oder weniger als 0,015 Gew.-% V2O5, bevorzugt kein V₂O₅, enthält.

9. Einrichtungs- oder Ausstattungsgegenstand (1) nach einem der vorhergehenden Ansprüche,
**dadurch gekennzeichnet, dass**
zwischen einem prozentualen Grauwert G1 des Gegenstandes (1) im Bereich der Aussparung (8) des Abdeckmittels (6) des Trennelementes (3) bei ausgeschalteter Anzeigeeinrichtung (2) und einem prozentualen Grauwert G2 des Gegenstandes (1) im Bereich des Abdeckmittels (6) ohne Aussparung (8) ein Unterschied |G₁-G₂| von weniger als 5,0 %, bevorzugt von weniger als 3,5%, besonders bevorzugt von weniger als 2,5 % und ganz besonders bevorzugt von weniger als 1,5 % besteht.

10. Einrichtungs- oder Ausstattungsgegenstand (1) nach einem der vorhergehenden Ansprüche,
**dadurch gekennzeichnet, dass**
das Trennelement (3) im Bereich der Aussparung (8) einen Haze von höchstens 5 %, bevorzugt höchstens 2 %, besonders bevorzugt höchstens 1 % und/oder eine Clarity von mindestens 90 %, bevorzugt mindestens 95 %, ganz besonders bevorzugt mindestens 98% aufweist.

11. Einrichtungs- oder Ausstattungsgegenstand (1) nach einem der vorhergehenden Ansprüche,
**dadurch gekennzeichnet, dass**
die Anzeigeeinrichtung (2) ein LCD-Display, ein OLED-Display oder ein Videoprojektor ist.

12. Einrichtungs- oder Ausstattungsgegenstand (1) nach einem der vorhergehenden Ansprüche,
**dadurch gekennzeichnet, dass**
der Gegenstand (1) ein Tisch, insbesondere ein Kochtisch oder ein Labortisch, ein Küchenschrank, ein Küchengerät, insbesondere ein Kochgerät, ein Backofen, ein Mikrowellengerät, ein Kühlschrank, ein Grill, Dampfgarer, Toaster oder eine Abzugshaube ist.

13. Einrichtungs- oder Ausstattungsgegenstand (1) nach einem der vorhergehenden Ansprüche,
**dadurch gekennzeichnet, dass**
das Trennelement (3) eine Tischplatte, insbesondere eine Kochtischplatte oder eine Labortischplatte, eine Küchenarbeitsplatte, ein Kochfeld oder eine Backofentür, eine Mikrowellentür, ein Teil des Korpus eines Möbels, ein Teil der Front einer Tür oder einer Schublade ist.

14. Einrichtungs- oder Ausstattungsgegenstand (1) nach einem der vorhergehenden Ansprüche,
**dadurch gekennzeichnet, dass**
das Abdeckmittel (6) eine Beschichtung, ein selbsttragendes Trägermaterial, insbesondere eine Platte oder Folie aus Glas, Glaskeramik, Kunststoff oder Isolationsmaterialien, oder eine Kombination davon ist.

## Claims

1. Fitout article or article of equipment (1) for a kitchen or laboratory, comprising a display device (2) and a separation element (3),
wherein the separation element (3) separates, at least in certain areas, an internal region (4) of the article (1) from an external region (5), wherein the display device (2) is disposed in the internal region (4) of the article (1) in such a way that light emitted by the display device (2) passes through a portion of the separation element (3) and is perceivable by a user in the external region (5) of the article (1),
wherein the separation element (3) comprises a glass substrate or a glass ceramic substrate, wherein the glass ceramic substrate comprises a coefficient of thermal expansion CTE between 20 and 300°C of -2.5 to 2.5×10⁻⁶/K or the glass substrate comprises a coefficient of thermal expansion CTE between 20 and 300°C of 3.5 to 6×10⁻⁶/K and a glass transition temperature T_{g} of 500 to 650°C, in particular of 550 to 650°C,
wherein a covering means (6) is disposed on the side of the separation element (3) facing the internal region (4) of the article (1),
wherein the covering means (6) has a light transmittance of no more than 7% and, at least in the region of the display device (2), comprises at least one cutout (8) which overlaps with the glass substrate or glass ceramic substrate,
wherein the separation element (3) has a light transmittance of at least 5% and most 70% in the region of the cutout (8),
wherein the covering means (6) has a colour point in the CIELAB colour space with coordinates L* from 20 to 40, a* from -6 to 6 and b* from -6 to 6, measured in reflection with D65 standard illuminant light against a black trap in transmitted view through the glass substrate or glass ceramic substrate,
wherein the colour point of D65 standard illuminant light after the passage through the glass substrate or glass ceramic substrate of the separation element (3) in the region of the cutout (8) of the covering means (6) lies within a white region W1, determined in the chromaticity diagram CIExyY-2° by the following coordinates:
White region W1
| | |
|---|---|
| x | y |
| 0.27 | 0.21 |
| 0.22 | 0.25 |
| 0.32 | 0.37 |
| 0.45 | 0.45 |
| 0.47 | 0.34 |
| 0.36 | 0.29 |

2. Fitout article or article of equipment (1) according to Claim 1,
**characterized in that**
it does not comprise a black-body compensation filter.

3. Fitout article or article of equipment (1) according to Claim 1 or 2, **characterized in that** the covering means (6) has a light transmittance of no more than 1%, preferably no more than 0.1%.

4. Fitout article or article of equipment (1) according to any one of Claims 1 to 3, **characterized in that** the separation element (3) in the region of the cutout (8) has a transmission at a wavelength of 1600 nm of at least 30%, preferably at least 45%, particularly preferably at least 60% and/or a transmission at at least one wavelength in the range between 850 nm and 1000 nm of at least 3%, preferably at least 10%, particularly preferably at least 30% and/or a transmission at at least one wavelength in the range between 3.25 µm and 4.25 µm of at least 10%, preferably at least 20%, particularly preferably at least 30%.

5. Fitout article or article of equipment (1) according to any one of the preceding claims,
**characterized in that**
the separation element (3) in the region of the cutout (8) has a light transmittance of at least 9%, preferably at least 15%, particularly preferably at least 20% and of no more than 55%, preferably no more than 45%, particularly preferably no more than 40%.

6. Fitout article or article of equipment (1) according to any one of the preceding claims,
**characterized in that**
the covering means (6) in transmitted view through the glass substrate or glass ceramic substrate has a colour point in the CIELAB colour space with L* less than or equal to 35, preferably less than or equal to 30, particularly preferably less than or equal to 28 and greater than or equal to 22, preferably greater than or equal to 25, with a* from -4 to 4, preferably from -2 to 2, and with b* from -4 to 4, preferably from -2 to 2, measured in diffuse reflection.

7. Fitout article or article of equipment (1) according to any one of the preceding claims,
**characterized in that**
the separation element (3) comprises a glass substrate or glass ceramic substrate and a coating for setting the light transmittance, wherein the coating consists of one of the following material systems: spinels, cermets, carbides, carbonitrides.

8. Fitout article or article of equipment (1) according to any one of the preceding claims,
**characterized in that**
the glass ceramic substrate of the separation element (3) contains 0.003-0.5% by weight of MoO₃ as colouring component and/or less than 0.2% by weight of Nd₂O₃, preferably no Nd₂O₃, and/or less and 0.015% by weight of V₂O₅, preferably no V₂O₅.

9. Fitout article or article of equipment (1) according to any one of the preceding claims,
**characterized in that**
there is a difference |G₁-G₂| between a percentage grey value G₁ of the article (1) in the region of the cutout (8) of the covering means (6) of the separation element (3) when the display device (2) is deactivated and a percentage grey value G₂ of the article (1) in the region of the covering means (6) without cutout (8) of less than 5.0%, preferably of less than 3.5%, particularly preferably of less than 2.5% and very particularly preferably of less than 1.5%.

10. Fitout article or article of equipment (1) according to any one of the preceding claims,
**characterized in that**
the separation element (3) in the region of the cutout (8) has a haze of no more than 5%, preferably no more than 2%, particularly preferably no more than 1% and/or a clarity of at least 90%, preferably at least 95%, very particularly preferably at least 98%.

11. Fitout article or article of equipment (1) according to any one of the preceding claims,
**characterized in that**
the display device (2) is an LCD display, an OLED display or a video projector.

12. Fitout article or article of equipment (1) according to any one of the preceding claims,
**characterized in that**
the article (1) is a table, in particular a cooking table or a laboratory table, a kitchen cabinet, a kitchen appliance, in particular a cooking appliance, an oven, a microwave appliance, a refrigerator, a grill, steam cooker, toaster or an extractor hood.

13. Fitout article or article of equipment (1) according to any one of the preceding claims,
**characterized in that**
the separation element (3) is a table top, in particular a cooking table top or a laboratory table top, a kitchen worktop, a hob or an oven door, a microwave oven door, part of the body of an item of furniture, part of the front of a door or of a drawer.

14. Fitout article or article of equipment (1) according to any one of the preceding claims,
**characterized in that**
the covering means (6) is a coating, a self-supporting carrier material, in particular a plate or a film made of glass, glass ceramic, plastic or insulation materials, or a combination thereof.

## Revendications

1. Objet d'ameublement ou d'équipement (1) pour une cuisine ou un laboratoire comprenant un dispositif d'affichage (2) et un élément de séparation (3);
l'élément de séparation (3) séparant au moins en partie une zone intérieure (4) de l'objet (1) d'une zone extérieure (5);
le dispositif d'affichage (2) étant disposé de telle sorte dans la zone intérieure (4) de l'objet (1) que la lumière émise vers l'extérieur depuis le dispositif d'affichage (2) entre à travers une section de l'élément de séparation (3) et est perceptible par un utilisateur se trouvant dans la zone extérieure (5) de l'objet (1);
l'élément de séparation (3) comprenant un substrat en verre ou en vitrocéramique, le substrat en vitrocéramique comprenant un coefficient de dilatation thermique CTE entre 20 et 300 °C de -2,5 à 2,5 x 10⁻⁶/K ou le substrat en verre comprenant un coefficient de dilatation thermique CTE entre 20 et 300 °C de 3,5 à 6 x 10⁻⁶/K et une température de transition vitreuse T_{g} de 500 à 650 °C, notamment de 550 à 650 °C;
un moyen de recouvrement (6) étant disposé sur le côté de l'élément de séparation (3) orienté vers la zone intérieure (4) de l'objet (1);
le moyen de recouvrement (6) comportant un degré de transmission de lumière de tout au plus 7 % et comportant au moins un évidement (8) au moins dans la région du dispositif d'affichage (2) revêtu par le substrat en verre ou en vitrocéramique;
l'élément de séparation (3) présentant un degré de transmission de lumière d'au moins 5 % et de tout au plus 70 % dans la région de l'évidement (8);
le moyen de recouvrement (6) comportant une localisation chromatique dans l'espace chromatique CIELAB avec les coordonnées L* de 20 à 40, a* de -6 à 6 et b* de -6 à 6, mesurées en rémission avec une lumière de type de lumière normalisée D65 contre un fond noir en vue traversante à travers le substrat en verre ou en vitrocéramique;
la localisation chromatique de la lumière du type de lumière normalisée D65 après entrée à travers le substrat en verre ou en vitrocéramique de l'élément de séparation (3) se situe dans la région de l'évidement (8) du moyen de recouvrement (6) à l'intérieur d'une zone blanche W1 définie par les coordonnées suivantes dans le diagramme chromatique CIExyY-2° :
Zone blanche W1
| | |
|---|---|
| X | y |
| 0,27 | 0,21 |
| 0,22 | 0,25 |
| 0,32 | 0,37 |
| 0,45 | 0,45 |
| 0,47 | 0,34 |
| 0,36 | 0,29 |

2. Objet d'ameublement ou d'équipement (1) selon la revendication 1, **caractérisé en ce qu'il** ne comprend pas de filtre de compensation de corps noir.

3. Objet d'ameublement ou d'équipement (1) selon la revendication 1 ou 2, **caractérisé en ce que** le moyen de recouvrement (6) comporte un degré de transmission de lumière de tout au plus 1 %, de façon préférée de tout au plus 0,1 %.

4. Objet d'ameublement ou d'équipement (1) selon l'une quelconque des revendications 1 à 3, **caractérisé en ce que** l'élément de séparation (3) comporte une transmission d'au moins 30 %, de préférence d'au moins 45 %, de façon particulièrement préférée d'au moins 60 % dans la région de l'évidement (8) à une longueur d'onde de 1600 nm et/ou comporte une transmission d'au moins 3 %, de façon préférée d'au moins 10 %, de façon particulièrement préférée d'au moins 30 % à une longueur d'onde dans la plage comprise entre 850 nm et 1000 nm et/ou comporte une transmission d'au moins 10 %, de façon préférée d'au moins 20 %, de façon particulièrement préférée d'au moins 30 % à une longueur d'onde dans la plage comprise entre 3,25 µm et 4,25 µm.

5. Objet d'ameublement ou d'équipement (1) selon l'une quelconque des revendications précédentes, **caractérisé en ce que** l'élément de séparation (3) comporte un degré de transmission de lumière d'au moins 9 %, de façon préférée d'au moins 15 %, de façon particulièrement préférée d'au moins 20 % et de tout au plus 55 %, de façon préférée de tout au plus 45 %, de façon particulièrement préférée de tout au plus 40 % dans la région de l'évidement (8).

6. Objet d'ameublement ou d'équipement (1) selon l'une quelconque des revendications précédentes, **caractérisé en ce que** le moyen de recouvrement (6) comporte en vue traversante à travers le substrat en verre ou en vitrocéramique une localisation chromatique dans l'espace chromatique CIELAB avec L* inférieur ou égal à 35, de façon préférée inférieur ou égal à 30, de façon particulièrement préférée inférieur ou égal à 28 et supérieur ou égal à 22, de façon préférée supérieur ou égal à 25, avec a* de -4 à 4, de façon préférée de-2 à 2 et avec b* de -4 à 4, de façon préférée de -2 à 2, mesurés en rémission.

7. Objet d'ameublement ou d'équipement (1) selon l'une quelconque des revendications précédentes, **caractérisé en ce que** l'élément de séparation (3) comporte un substrat en verre ou en vitrocéramique et un revêtement servant au réglage du degré de transmission de lumière, le revêtement selon l'une quelconque des revendications suivantes se composant des systèmes de matières suivants : les spinelles, les cermets, les carbures, les carbonitrures.

8. Objet d'ameublement ou d'équipement (1) selon l'une quelconque des revendications précédentes, **caractérisé en ce que** le substrat en vitrocéramique de l'élément de séparation (3) contient 0,003-0,5 % en poids de MoO₃ servant de colorant et/ou moins de 0,2 % en poids de Nd₂O₃, de façon préférée aucun Nd₂O₃, et/ou moins de 0,015 % en poids V₂O₅, de façon préférée aucun V₂O₅.

9. Objet d'ameublement ou d'équipement (1) selon l'une quelconque des revendications précédentes, **caractérisé en ce qu'**entre une valeur de gris G₁, exprimée en pourcentage, de l'objet (1) dans la région de l'évidement (8) du moyen de recouvrement (6) de l'élément de séparation (3) en cas de dispositif d'affichage (2) déconnecté et une valeur de gris G₂, exprimée en pourcentage, de l'objet (1) dans la région du moyen de recouvrement (6) sans évidement (8), on a une différence |G₁-G₂| inférieure à 5,0 %, de façon préférée inférieure à 3,5 %, de façon particulièrement préférée inférieure à 2,5 % et de façon tout particulièrement préférée inférieure à 1,5 %.

10. Objet d'ameublement ou d'équipement (1) selon l'une quelconque des revendications précédentes, **caractérisé en ce que** l'élément de séparation (3) comporte dans la région de l'évidement (8) un voile de tout au plus 5 %, de façon préférée de tout au plus 2 %, de façon particulièrement préférée de tout au plus 1 % et/ou une clarté d'au moins 90 %, de façon préférée d'au moins 95 %, de façon tout particulièrement préférée d'au moins 98 %.

11. Objet d'ameublement ou d'équipement (1) selon l'une quelconque des revendications précédentes, **caractérisé en ce que** le dispositif d'affichage (2) est un écran LCD, un écran OLED ou un vidéoprojecteur.

12. Objet d'ameublement ou d'équipement (1) selon l'une quelconque des revendications précédentes, **caractérisé en ce que** l'objet (1) est une table, notamment une table de cuisson ou une table de laboratoire, un placard de cuisine, un appareil électroménager, notamment un appareil de cuisson, un four, un appareil micro-ondes, un réfrigérateur, un grill, un cuit-vapeur, un grille-pain ou une hotte aspirante.

13. Objet d'ameublement ou d'équipement (1) selon l'une quelconque des revendications précédentes, **caractérisé en ce que** l'élément de séparation (3) est une plaque de table, notamment une plaque de table de cuisson ou une plaque de table de laboratoire, une plaque de travail de cuisine, un plan de cuisson ou une porte de four, une porte de micro-ondes, une partie du corps d'un meuble, une partie de l'avant d'une porte ou d'un tiroir.

14. Objet d'ameublement ou d'équipement (1) selon l'une quelconque des revendications précédentes, **caractérisé en ce que** le moyen de recouvrement (6) est un revêtement, notamment une matière de support autoportante, notamment une plaque ou un film en verre, en vitrocéramique, en matière plastique ou en matière isolante ou une combinaison de ceux-ci.
